(19) Europäisches Patentamt / European Patent Office / Office européen des brevets

(11) **EP 4 016 049 B1**

(12) **FASCICULE DE BREVET EUROPEEN**

(45) Date de publication et mention de la délivrance du brevet:
**01.05.2024 Bulletin 2024/18**

(21) Numéro de dépôt: **20214341.8**

(22) Date de dépôt: **15.12.2020**

(51) Classification Internationale des Brevets (IPC):
**G01N 19/02** *(2006.01)* **G04B 15/14** *(2006.01)*

(52) Classification Coopérative des Brevets (CPC):
**G01N 19/02; G04B 15/14; G04B 31/06**

(54) **MÉTHODE DE MODÉLISATION DU COEFFICIENT DE FROTTEMENT D'UN SYSTÈME MÉCANIQUE COMPRENANT AU MOINS DEUX PIÈCES MICROMÉCANIQUES DESTINÉES À COOPÉRER ENTRE ELLE PAR GLISSEMENT OU ROULEMENT**

VERFAHREN ZUR MODELLIERUNG DES REIBUNGSKOEFFIZIENTEN EINES MECHANISCHEN SYSTEMS, DAS MINDESTENS ZWEI MIKROMECHANISCHE TEILE UMFASST, DIE DURCH GLEITEN ODER ROLLEN MITEINANDER KOOPERIEREN SOLLEN

METHOD FOR MODELING THE COEFFICIENT OF FRICTION OF A MECHANICAL SYSTEM COMPRISING AT LEAST TWO MICROMECHANICAL PARTS INTENDED TO COOPERATE WITH ONE ANOTHER BY SLIDING OR ROLLING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(43) Date de publication de la demande:
**22.06.2022 Bulletin 2022/25**

(73) Titulaire: **Patek Philippe SA Genève**
**1204 Genève (CH)**

(72) Inventeurs:
• **Mischler, Stefano**
**1315 La Sarraz (CH)**
• **Nguyen, Vance**
**Toronto, M9A 1M3 (CA)**
• **Perret, Julien**
**74350 Andilly (FR)**

(74) Mandataire: **Micheli & Cie SA**
**Rue de Genève 122**
**Case Postale 61**
**1226 Genève-Thônex (CH)**

(56) Documents cités:
**US-A1- 2015 323 901**

• **PANTCHO STOYANOV ET AL: "Scaling Effects on Materials Tribology: From Macro to Micro Scale", MATERIALS, vol. 10, no. 5, 1 mai 2017 (2017-05-01), page 550, XP055617055, CH ISSN: 1996-1944, DOI: 10.3390/ma10050550**

## Description

La présente invention a pour objet une méthode de modélisation du coefficient de frottement (ci-après COF) d'un système mécanique comprenant au moins deux pièces micromécaniques destinées à coopérer entre elle par glissement ou roulement.

Introduction et art antérieur

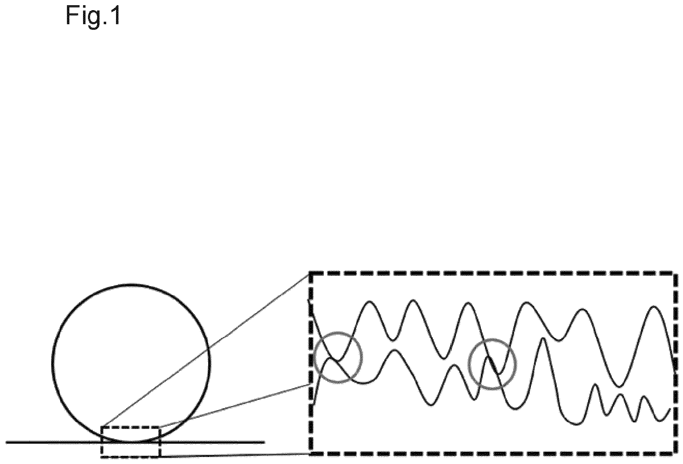

Lorsque deux corps en contact glissent ou roulent l'un par rapport à l'autre, la force opposée au mouvement est appelé force de frottement. Les surfaces des corps en contact ne sont jamais parfaitement lisses mais présent des aspérités telles qu'illustrées à la figure 1. Ces aspérités forment des zones de contact entre les deux corps dans lesquelles peuvent apparaître des phénomènes d'adhésion ou de déformation. Ces deux phénomènes génèrent une dissipation d'énergie qui est à l'origine de la force de frottement. Par conséquent, plusieurs facteurs influençant l'adhésion et la déformation dans les zones de contact des aspérités auront un effet sur le frottement. De manière générale, le frottement va donc dépendre de trois éléments: l'aire totale des zones de contact des aspérités, les forces d'adhésion des matériaux, la tendance des matériaux à la déformation.

L'aire totale des zones de contact des aspérités est appelée aire de contact réelle entre les deux pièces en frottement (zones entourées par un cercle dans la figure 1). Elle est différente de l'aire de contact apparente, qui est l'aire de contact visible à l'échelle macroscopique (à l'oeil nu, zone entourée d'un rectangle dans la figure 1). L'air de contact réelle va notamment dépendre de la forme des surfaces en contact et de la topographie desdites surface (la topographie ou état de surface décrit la nature de la surface en termes de forme, rugosité et ondulation et comprend les défauts par rapport à une surface idéale parfaitement lisse). Plus l'aire de contact réelle est grande plus la force nécessaire pour surmonter les effets d'adhésion et de déformation sera grande. L'aire de contact réelle peut par exemple augmenter si la force normale entre les surfaces de contact augmente. On a donc cherché à caractériser la force de frottement par un coefficient de frottement (COF) noté $\mu$ qui est défini par le rapport $\dfrac{F_f}{F_N}$ où $F_f$ est la force de frottement et $F_N$ la force normale.

Les forces à l'origine du phénomène d'adhésion entre les surfaces des pièces en contact sont principalement des forces intermoléculaires et vont donc dépendre des propriétés des matériaux en contact et des facteurs environnementaux auxquels est sensible la chimie de surface des pièces en contact (humidité, température, contamination durant la manipulation des pièces). C'est l'énergie nécessaire pour rompre le lien entre les zones de contact des aspérités créées par le phénomène d'adhésion qui va déterminer l'effet de l'adhésion sur le frottement total du système.

La déformation caractérise la manière dont réagit un matériau donné quand il est soumis à des forces ou contraintes mécaniques. La déformation est élastique lorsque le matériau retrouve sa forme et sa taille initiales quand les forces ne s'exercent plus, jusqu'à une certaine limite de valeur pour ces forces (limite d'élasticité). La déformation plastique est la déformation irréversible d'un matériau qui a lieu lorsque les contraintes dépassent la limite d'élasticité. Certains matériaux sont dits ductiles et sont capables de supporter des contraintes importantes et une déformation plastique importante avant de rompre. A l'inverse, pour certains matériaux dits fragiles, la rupture a lieu dès que la limite d'élasticité est dépassée et ces matériaux n'ont quasi pas de déformation plastique. Ainsi, la déformation des aspérités dans le temps causée par le frottement va faire évoluer la topographie des surfaces de contact et donc avoir une influence sur l'évolution même du frottement total.

La déformation plastique due au frottement peut entraîner rupture et enlèvement de matière à la surface des contacts, soit une usure des surfaces. Cette dégradation des surfaces de contact va également jouer un rôle dans l'évolution du frottement dans le temps.

Dans un système mécanique, comme un mécanisme d'un mouvement d'horlogerie, les frottements entre les différentes pièces mécaniques coopérant entre elles entraînent une perte d'énergie et donc une réduction de l'efficacité du mécanisme. De plus, les variations de frottement dans le temps dues aux phénomènes détaillés ci-dessus rendent le système mécanique instable. On cherche donc à optimiser le système mécanique pour avoir un frottement minimal et constant.

Une solution envisageable et appliquée notamment en horlogerie est d'utiliser un lubrifiant (huile, graisse...). Cependant, dans un mouvement horloger, il n'est pas toujours facile de contenir le lubrifiant dans une région précise du mécanisme et l'étalement du lubrifiant en dehors des zones où il est nécessaire peut être problématique. De plus, l'utilisation de lubrifiant nécessite souvent un passage régulier par le service après-vente pour un nettoyage du mécanisme et une recharge en lubrifiant. Il serait donc souhaitable de pouvoir optimiser le frottement dans des conditions de frottement sec, sans lubrification.

On s'est également tourner vers des nouveaux matériaux, notamment des matériaux fragiles, comme le silicium ou l'oxyde de silicium (SiO2). Ces matériaux présentent des propriétés mécaniques très intéressantes et peuvent être utilisés dans la fabrication de grande précision à large échelle de pièces micromécaniques. Les horlogers ont donc de plus en plus recours à ces matériaux.

Les mécanismes horlogers sont composés de pièce de très petites tailles, dites pièces micromécaniques dont les dimensions peuvent être de l'ordre de quelques centaines de micromètres. Ces pièces micromécaniques sont soumises à des forces variant entre quelques centaines de micronewtons et quelques centaines de millinewtons. Si l'on considère le contact entre une dent d'une pièce micromécanique et la surface de contact de la pièce avec laquelle elle coopère ou le contact entre un pivot et sa surface de pivotement, ces deux formes de contact sont similaires à un contact de type cylindre sur surface plate (cylinder-on-flat ou ball-on-flat en anglais) pour lequel on peut appliquer la théorie de Hertz. Les mouvements considérés sont soit un mouvement de glissement réciproque linéaire ou un mouvement de roulement entre le cylindre et la surface plate dont la vitesse est en général de l'ordre du millimètre par seconde. Dans les conditions horlogères, il est possible d'agir sur la forme des contacts et la topographie de la surface pour modifier ou optimiser les paramètres mécaniques comme le frottement.

Il existe différents modèles applicables aux conditions horlogères rappelées ci-dessus et décrivant le frottement sec, son évolution et les facteurs qui l'affectent.

Le modèle classique Amonton-Coulomb repose sur trois lois empiriques :

- La force de frottement est proportionnelle à la force normale ;
- La force de frottement ne dépend pas de l'air de contact apparente ;
- La force de frottement ne dépend pas de la vitesse de glissement/roulement.

L'équation suivante caractérise ce modèle classique pour des matériaux avec déformation plastique durant le glissement/roulement :

$$\mu = \frac{\tau}{H}$$

avec $\mu$ le coefficient de frottement, $\tau$ la contrainte de cisaillement en surface et H la dureté du matériau. Cependant, cette équation ne permet pas de décrire suffisamment précisément les systèmes mécaniques avec peu ou pas de déformation plastique, comme les systèmes impliquant des matériaux fragiles.

Dans les cas de système avec déformation purement élastique, il a pu être montré que la première loi ci-dessus n'était plus valable et que l'on avait plutôt :

$$\mu = \frac{\tau}{F_N^n}$$

avec *n* plus grand que 2/3. Cela semble être dû à l'augmentation de l'aire de contact réelle lors d'une déformation élastique. Cette expression ajustée pour des conditions de déformation purement élastique ne prend cependant pas en compte les phénomènes chimiques ou physiques dépendant du temps et influençant le frottement comme l'adhésion ou la contamination de la surface de contact.

Des modèles ont été développés pour tenter de caractériser le frottement au niveau des aspérités de surface. D'autres modèles encore, dit atomistes, tentent de caractériser le frottement au niveau atomique. Cependant, aucun de ces modèles n'est satisfaisant pour une utilisation industrielle, et notamment horlogère, puisque les paramètres utilisés ne sont pas définis mécaniquement et ne sont pas basés sur des caractéristiques quantifiables de la surface de contact comme sa géométrie ou sa topographie. Les modèles atomistes sont en outre limités à des conditions particulières (surface lisse sans adhésion, basse température).

Enfin, il existe encore de nombreux modèles qui cherchent à généraliser des modèles empiriques de manière heuristique. Là encore, ces modèles construits pour coller au plus près des résultats expérimentaux ne tiennent pas compte des mécanismes physiques intervenant dans le frottement et dont il est nécessaire d'avoir connaissance pour prédire l'évolution du frottement à partir de caractéristiques mesurables.

Ainsi, aucun des modèles connus ne permet de faire le lien entre frottement et caractéristiques mécaniques des surfaces de contact, en particulier entre frottement et forme géométrique de la surface ou topographie de la surface. En particulier, aucun des modèles connus ne permet de caractériser le frottement et son évolution dans le temps dans les conditions particulières d'un mécanisme horloger. Il serait très intéressant pour l'horloger de pouvoir modéliser ou prédire le COF en fonction notamment de la géométrie ou de la topographie de surface qui sont deux paramètres que l'horloger a la liberté de contrôler lors de la mise au point (fabrication, montage) d'un mécanisme et de ses composants.

"Scaling Effects on Materials Tribology: From Macro to Micro Scale", de Pantcho Stoyanov et Richard R. Chromik, MATERIALS, vol. 10, no. 550, 1 mai 2017, DOI: 10.3390/ ma10050550, divulgue des méthodes connues de calcul de coefficient de frottement.

Le but de la présente invention est de fournir une méthode de modélisation du coefficient de frottement d'un système mécanique comprenant au moins deux pièces micromécaniques, dans des conditions de frottement de type glissement ou roulement et de déformation purement élastique (matériaux fragiles par exemple), la méthode permettant de prédire le COF et son évolution dans le temps lors de la marche du système mécanique sur la base de caractéristiques mesurables des pièces du système afin de pouvoir optimiser lesdites caractéristiques et/ou choisir les pièces optimales (géométrie, topographie de surface) parmi plusieurs options. Le but est en particulier de fournir à l'horloger une méthode de modélisation du coefficient de frottement qui lui permette de choisir la géométrie et la topographie de surface optimale pour obtenir un coefficient de frottement minimal et constant.

La présente invention a pour objet une méthode selon la revendication 1.

Liste des figures

Les figures annexées illustrent schématiquement et à titre d'exemple la méthode selon l'invention.

La figure 1 illustre l'aire de contact apparente et les zones de contact entre les aspérités de surface qui forment l'are de contact réelle.

La figure 2 illustre un exemple de système mécanique auquel est appliqué la méthode selon l'invention.

La figure 3 illustre le COF en fonction du temps obtenu expérimentalement pour le système de la figure 2 pour une durée de 70000 cycles ou alternances à une fréquence de 1Hz pour une force normale de 1mN, une alternance de longueur 2 mm et un rayon de la pointe de 5 $\mu$m. Le tracé continu supérieur illustre un essai en continu tandis que le tracé haché inférieur illustre le même essai avec interruption et reprise du mouvement à 10000, 20000, 30000 et 40000 alternances.

La figure 4 est une illustration schématique des phénomènes contribuant au frottement : $E_{ad}$ l'énergie de cisaillement due à l'adhésion des aspérités des surfaces de contact, $E_{Ez}$ l'énergie dissipée lors de la restitution de la déformation élastique verticale et $E_{Ey}$ l'énergie élastique de déformation tangentielle.

La figure 5 illustre schématiquement la déformation verticale pour un système du type bille-sur-plat.

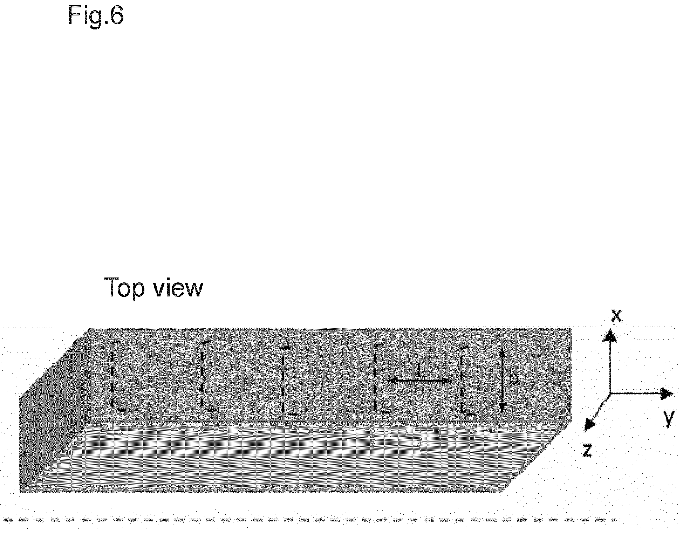

Les figures 6 et 7 illustrent schématiquement les fissures à la surface de la seconde surface de contact comme autant de poutres cantilevers de longueur a et de largeur b, vues du dessus et de côté respectivement.

La figure 8 illustre un test de rayure avec des pièces micromécaniques recouvertes par pulvérisation d'une couche de 3 nm d'or.

La figure 9 illustre le contact idéal entre un cylindre et une surface plate sur la partie gauche et le contact en cas de mauvais alignement sur la partie droite.

La figure 10 illustre le contact entre une seconde surface de contact idéalement lisse et une première surface de contact plate et rugueuse.

Les figures 11a et 11b illustrent la géométrie des surfaces de contact dans le cas d'un système du type cylindre sur plat, comme le système de la figure 2, et avec un mauvais alignement des surfaces.

Les figures 12a, 12b et 12c sont des images SEM d'un échantillon de la seconde pièce micromécanique vue du côté perpendiculaire à la direction de glissement, vue de côté parallèle à la direction de glissement et vue de face respectivement.

La figure 13 illustre le profil AFM de la surface de contact plate 10 du système de la figure 2 dans une direction perpendiculaire un mouvement, ce profil AFM étant mis bout à bout ou cousu (stitched) de manière continue pour obtenir un profil complet utilisable dans la simulation numérique.

La figure 14 illustre le résultat de l'application de la méthode des éléments finis de frontière pour déterminer la largeur de l'aire de contact réelle.

La figure 15 est une image SEM d'une section transversale d'une pièce micromécanique en oxyde de silicium brisée à la main.

La figure 16 illustre les zones critiques de propagation des fissures.

La figure 17 illustre le lien entre $\Delta\mu_{ad}$ et le temps d'interruption $t_{int}$.

La figure 18 illustre la composante d'adhésion du COF $\mu_{ad}$ en fonction du temps t.

La figure 19 illustre des valeurs modélisées pour a selon L et da/dt.

La figure 20 compare les résultats expérimentaux avec l'application du modèle pour les valeurs extrêmes des intervalles de validité déterminés pour L et $\dfrac{da}{dt}$ avec $a_0$ = 0.

La figure 21 illustre différentes valeurs de $a_0$ pour l'exemple du système mécanique 100 en comparaison avec les résultats expérimentaux.

La figure 22 illustre le COF obtenu par expérimentations et par modélisation (trait gras) par la méthode selon l'invention pour le système mécanique 100 de la figure 2 avec les paramètres déterminés ci-dessus et pour 5000 cycles.

La figure 23 illustre la modélisation de l'évolution du COF pour différentes valeurs d'angle d'inclinaison et la compare avec les résultats expérimentaux obtenus pour un angle d'inclinaison de 0.1° ($F_n$ = 1$mN$).

La figure 24 illustre la modélisation de l'évolution du COF pour différentes valeurs de rayon caractéristique.

Description des essais expérimentaux à l'origine du modèle prédictif du frottement

A l'origine de la méthode selon l'invention, les inventeurs ont réalisé des essais expérimentaux sur des échantillons de systèmes mécaniques reproduisant les propriétés de certains systèmes mécaniques constitutifs d'un mouvement d'horlogerie. Les essais se sont notamment concentrés sur un système mécanique 100 composé d'une première pièce 1 en SiO2 présentant une première surface de contact 10, appelée plat, essentiellement plate et une seconde pièce 2 en SiO2 présentant une seconde surface de contact 20, appelée pointe, arrondie ou bombée et dont la forme est assimilable à un cylindre.

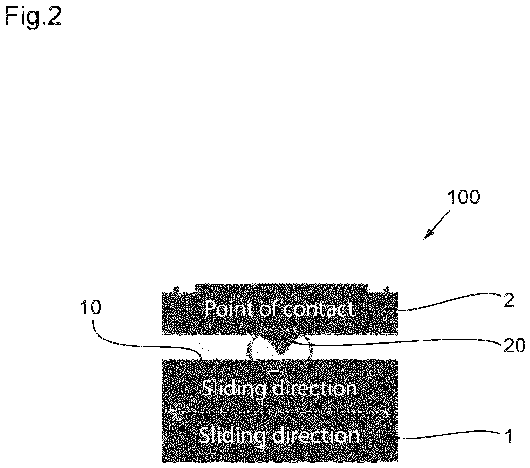

Le système mécanique 100 est configuré pour que la pointe 20 de la seconde pièce 2 glisse dans un mouvement de va-et-vient sur le plat 10 de la première pièce 1. Un tel échantillon de ce système mécanique 100 est illustré à la figure 2.

Des essais tribologiques ont été réalisés à l'aide d'un tribomètre spécialement agencé pour reproduire les conditions de fonctionnement d'un système mécanique dans un mouvement d'horlogerie (environnement, force normale, alignement...).

Les essais ont notamment été réalisés avec une vitesse de glissement de 8mm/s et une alternance de mouvement de longueur 2 mm. La force normale est variable entre 0.1 et 2 mN.

Plusieurs paramètres ont été testés pour déterminer leur influence sur le frottement, comme notamment : force normale, rugosité des surfaces de contact (plusieurs échantillons avec des rugosités de surface différentes), rayon caractéristique de la pointe, traitement de surface pour les surfaces de contact (plusieurs échantillons avec des traitements de surface différents), nombre de cycles de fonctionnement du système mécanique, fonctionnement continu ou régulièrement interrompu.

Les données récoltées durant ces essais expérimentaux ont été traitées à l'aide de scripts MATLAB et ont permis de calculer pour chaque essai un COF. Ledit COF est calculé comme le rapport direct entre la force tangentielle et la force normale (deux forces mesurables grâce aux outils de mesure du tribomètre).

Plusieurs techniques d'imagerie ont été utilisées pour observer et caractériser la géométrie et la topographie des surfaces de contact ainsi que leurs caractéristiques chimiques avant et après les essais expérimentaux. Il s'agit notamment de :

- La microscopie électronique à balayage (MEB) ou Scanning Electron Microscopy (SEM) en anglais : une technique de microscopie électronique capable de produire des images en haute résolution de la surface d'un échantillon en utilisant le principe des interactions électrons-matière ;
- La sonde ionique focalisée, plus connue sous le nom du sigle anglais FIB (« Focused ion beam ») : un instrument scientifique qui ressemble au microscope électronique à balayage (MEB), mais là où le MEB utilise uniquement un faisceau d'électrons focalisés pour faire l'image d'un échantillon, la FIB utilise un faisceau d'ions focalisés, généralement du gallium combiné à un faisceau d'électrons focalisés pour faire l'image d'un échantillon. Contrairement au MEB, la FIB est destructive mais permet d'étudier une coupe transversale de la surface de contact.
- Le microscope à force atomique (AFM pour l'anglais « atomic force microscope ») : un type de microscope à sonde locale permettant de visualiser la topographie de la surface d'un échantillon ;
- La spectrométrie photoélectronique X, ou spectrométrie de photoélectrons induits par rayons X (en anglais, « X-Ray photoelectron spectrometry » ou XPS) : une méthode de spectrométrie photoélectronique qui implique la mesure des spectres de photoélectrons induits par des photons de rayon X. Dans une expérience XPS, l'échantillon est bombardé par des rayons X d'une certaine longueur d'onde, ce qui émet un photoélectron qui est par la suite détecté. Les photoélectrons ont des énergies propres à chaque élément, ce qui permet de déterminer la composition de l'échantillon à sa surface pour une profondeur d'environ 5 nm.

Ces essais ont révélé certains comportements caractéristiques du frottement:

- Comportement à court terme : le frottement augmente rapidement durant les premières centaines de cycles de mouvement, augmentation qui est récupérée après une interruption dans le mouvement ;
- Comportement à long terme : Le frottement augmente de façon continue au cours du temps (avec ou sans

**5**

interruption) ;

- Aire de contact réelle : Le frottement dépend du rayon caractéristique du cylindre auquel la pointe est assimilée ;
- Usure et déformation plastique : L'usure des surfaces de contact dépend de la force normale, avec un seuil en dessous duquel aucune usure n'est observée. En particulier, en dessous dudit seuil, il n'y a aucune déformation plastique et aucune particule d'usure n'est visible. Les images SEM et les mesures AFM ne montrent aucun changement dans la topographie de surface des surfaces de contact entre avant et après les essais expérimentaux.
- Chimie de surface : les traitements de surface (lavage, prétraitement des pièces, revêtement...) et la chimie de surface ont une influence sur le COF et notamment sur sa magnitude et son augmentation à court et à long terme.

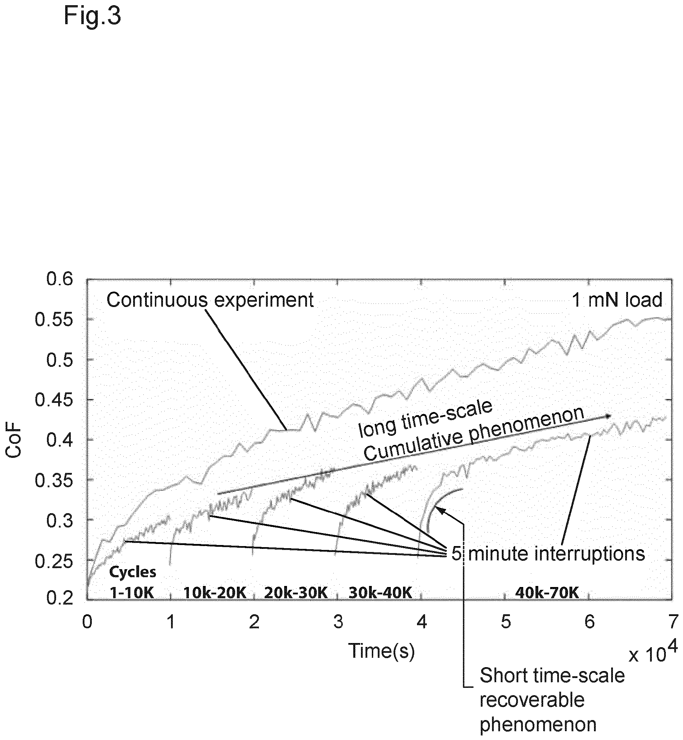

La figure 3 illustre un exemple de graphique de résultat obtenu pour un essai d'une durée de 70000 cycles ou alternances à une fréquence de 1 Hz pour une force normale de 1mN, une alternance de longueur 2 mm et un rayon de la pointe de 5 μm. Le tracé continu supérieur illustre un essai en continu tandis que le tracé haché inférieur illustre le même essai avec interruption et reprise du mouvement à 10000, 20000, 30000 et 40000 alternances. Durant une interruption, le mouvement de glissement des pièces est stoppé mais les pièces micromécaniques restent en contact. On distingue clairement sur cette figure le comportement à long terme et le comportement à court terme avec récupération après chaque interruption.

Les inventeurs ont donc cherché à développer un modèle prédictif du frottement qui peut tenir compte de ces comportements et notamment de l'absence d'usure, de l'influence de l'aire de contact réelle et de l'influence de la chimie de surface.

Première étape : fournir le système mécanique

La première étape de la méthode selon l'invention consiste à fournir le système mécanique dont on souhaite modéliser le COF et présentant les caractéristiques suivantes. Ce système mécanique comprend au moins deux pièces micromécaniques. La première pièce micromécanique présente une première surface de contact tandis que la seconde pièce micromécanique présente une seconde surface de contact arrondie ou bombée. Les première et seconde pièces micromécaniques sont agencées pour se déplacer l'une par rapport à l'autre de sorte que les première et seconde surfaces de contact glissent ou roulent l'une sur l'autre.

Selon la géométrie de la première surface de contact (essentiellement plate ou arrondie ou bombée, convexe ou concave), le système mécanique peut être assimilé à un système cylindre-sur-plat, bille-sur-plat, cylindre-sur-cylindre, bille-sur-bille ou encore à un système dont le contact est du type surface concave sur surface convexe. De manière plus générale, la géométrie de la première surface de contact est choisie de sorte qu'il est possible de calculer les déformations élastiques du système mécanique en fonctionnement selon la théorie de Hertz. Cela revient encore à dire que le contact (idéal) entre la première et la seconde surface de contact se fait essentiellement en un point ou une ligne (avec un légère tolérance pour un mauvais alignement) et non pas en une surface.

En ce qui concerne les matériaux utilisés, les pièces micromécaniques ou du moins leur surface de contact sont dans des matériaux qui se comportent de façon purement élastique dans les conditions de fonctionnement du système mécanique. Les pièces micromécaniques peuvent notamment être réalisées dans des matériaux fragiles comme le silicium ou l'oxyde de silicium ou les céramiques. Les première et seconde pièces micromécaniques peuvent être dans le même matériau ou dans deux matériaux différents mais qui en fonctionnement évoluent dans un régime sans déformation plastique.

La méthode selon l'invention s'applique donc à un système mécanique remplissant les conditions suivantes :

- Géométrie des surfaces en contact pour lesquelles la théorie de Hertz est applicable ;
- Mouvement de glissement et/ou roulement ;
- Matériaux des surfaces de contact avec comportement de déformation purement élastique, comme les matériaux fragiles.

De tels systèmes mécaniques sont nombreux dans un mouvement d'horlogerie. On peut notamment citer :

- palette de l'ancre et roue d'échappement : la palette a une surface de contact essentiellement plate tandis que le contact avec la dent de la roue d'échappement se fait sur une arête de la dent dont la forme est arrondie et assimilable à un cylindre ;
- contre-pivot et pivot : l'extrémité arrondie du pivot roule et/ou glisse sur la surface essentiellement plate du contre-pivot ;
- extrémité d'un ressort et point d'appui du mobile avec lequel le ressort travaille (bascule, levier...) : l'extrémité du ressort a une surface de contact essentiellement plate qui travaille avec un point d'appui de forme arrondie sur un mobile comme un levier ou une bascule ou vice-versa avec un ressort en pointe qui travaille avec une surface plate.

Tous les exemples ci-dessus se prêtent particulièrement bien à l'utilisation des matériaux fragiles et notamment du silicium.

Pour illustrer la mise en oeuvre de cette première étape de la méthode selon l'invention, on fournit un système mécanique tel qu'illustré à la figure 2.

Le système mécanique 100 de la figure 2 comprend une première pièce micromécanique 1 présentant une surface de contacte plate 10 et une seconde pièce micromécanique 2 présentant une surface de contacte arrondie appelée pointe 20. Les première et seconde pièces micromécaniques sont agencées pour que la pointe 20 glissent sur la surface de contacte plate 10 dans un mouvement de va-et-vient. Dans cet exemple, les deux pièces micromécaniques 1 et 2 sont réalisées en oxyde de silicium (SiO2).

Le système mécanique 100 est agencé pour reproduire le type de mouvement et les conditions de fonctionnement d'une dent de la roue d'échappement venant coopérer avec une palette de l'ancre dans un mouvement d'horlogerie.

Deuxième étape : extraction des paramètres caractérisant le système mécanique

Dans une deuxième étape de la méthode selon l'invention, on détermine les caractéristiques mécaniques et physiques du système mécanique 100 et notamment :

- $E$, le module d'élasticité du matériau de la première surface de contact de la première pièce micromécanique ;
- $G$, le module de cisaillement du matériau de la première surface de contacte de la première pièce micromécanique ;
- $v$, le coefficient de Poisson du matériau de la première surface de contacte de la première pièce micromécanique ;
- $v$, la vitesse du mouvement relatif entre les première et seconde pièces micromécaniques ;
- $F_N$, la force normale entre les première et seconde pièces micromécaniques ;
- $f$, la fréquence du mouvement relatif entre les première et seconde pièces micromécaniques ;
- $A$, l'aire de contact réelle entre les première et les seconde surface de contact ;
- $b$, la largeur de l'aire de contact réelle $A$ entre les première et les seconde surface de contact ;
- $\theta$, l'angle caractérisant le mauvais alignement entre les première et seconde pièces micromécaniques, angle d'inclinaison de la seconde pièce micromécaniques par rapport à un alignement parfait ;
- $\phi_0$, une constante caractérisant le taux initial de la première surface de contact couvert par des contaminants adsorbés. Cette constante vaut entre 0 et 1, 0 si la première surface de contact est totalement « propre », 1 si la première surface de contact est entièrement couverte de contaminants adsorbés ;
- $r$, le rayon de courbure caractéristique de la seconde surface de contact arrondie ou bombée.

Ces paramètres qui dépendent directement des conditions de fonctionnement du système mécanique, de ses propriété physiques et chimiques sont obtenus soit de mesures précises directement sur le système mécanique, soit de la littérature, soit à partir de résultats expérimentaux, soit par simulation numérique.

On détaille ci-après quelques façons privilégiées pour obtenir les paramètres ci-dessus, notamment en relation avec l'exemple concret de la figure 2.

Pour le système mécanique 100 de la figure 2, on connaît les propriétés du matériau oxyde de silicium fournies par le fabricant notamment : $E$ = 70 *GPa*, $G$ = 35*GPa* et $v$ = 0.17. Les paramètres de fonctionnement sont également connus et reflètent le cas d'une dent de la roue d'échappement coopérant avec la palette de l'ancre dans le mouvement d'horlogerie concerné : $v$ = 8 *mm/s*, $f$ = 1 *Hz* et $F_N$ = 1*mN*.

Le rayon $r$ de la seconde surface de contact arrondie ou bombée est en général une grandeur choisie lors de la fabrication de la pièce. Dans l'exemple de la figure 2, la pointe 20 a été fabriquée dans le but d'avoir $r$ = 5$\mu m$.

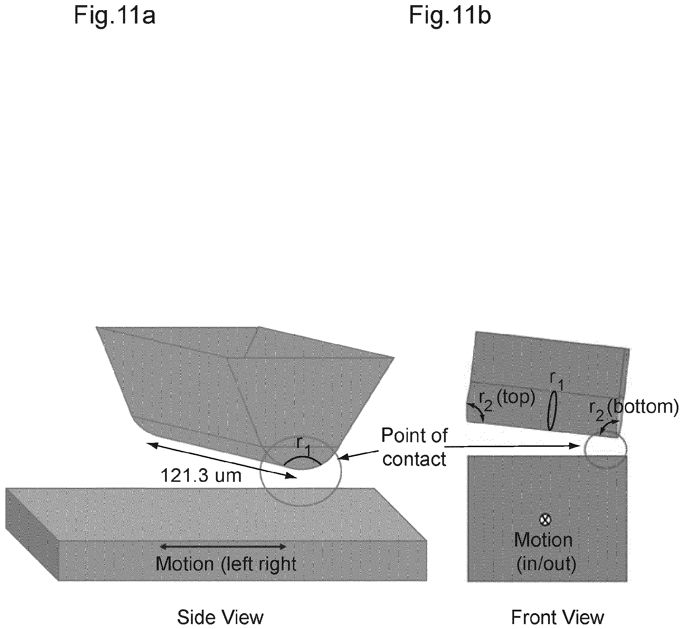

L'alignement des surfaces de contact n'est dans la pratique jamais parfait et se rapproche plus de celui illustrée aux figures 11a (vue de profil) et 11b (vue de face). L'angle d'inclinaison $\theta$ de la seconde pièce micromécaniques par rapport à un alignement parfait est facilement mesurable. Dans l'exemple de la figure 2, cet angle vaut 0.1° (0.4° sur la figure 11).

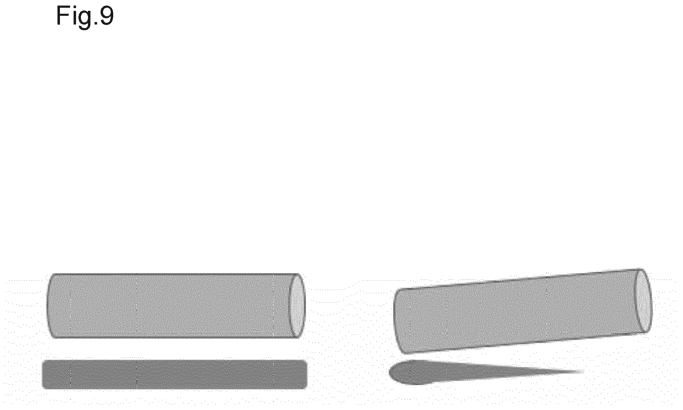

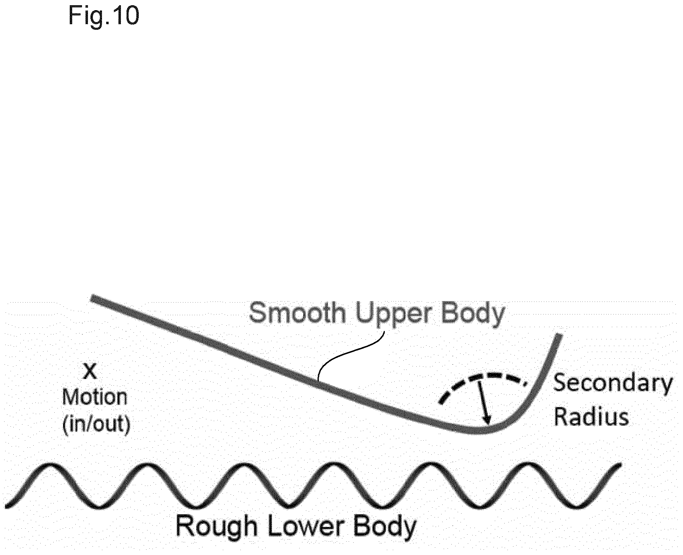

Une façon privilégiée d'extraire des valeurs pour $b$ et $A$ est de simuler le contact entre les pièces micromécaniques. On sait que l'on a choisi la géométrie des surfaces de contact pour pouvoir utiliser les modèles hertziens pour simuler la déformation élastique. Il y a cependant deux facteurs à prendre en compte : le mauvais alignement des contacts (illustré à la figure 9) et la rugosité des surfaces (figure 10). Avec ces deux facteurs, la pression de contact est plus grande et l'aire de contact est plus petite que dans le cas idéal avec deux surfaces de contact parfaitement alignées et parfaitement lisses. Il n'est donc pas précis d'utiliser la solution calculée par les modèles hertziens pour un cas idéal. Une solution par la méthode des éléments finis de frontière (boundary élément method) a donc été développée. Cette méthode implique la construction d'un maillage sur les surfaces à modéliser. Il faut donc déterminer la géométrie de la zone de contact et la topographie de surface de contact.

La géométrie de la zone de contact dépend de l'alignement des surfaces de contact. Comme on l'a vu, la seconde surface de contact arrondie ou bombée est mal alignée de sorte que le contact avec la première surface de contact se fait sur une arête. Cette arête de contact peut être assimilée à un cylindre caractérisé par deux rayons de courbure $r_1$ et $r_2$ qui ne sont pas uniformes sur toute la longueur du cylindre. On distingue ainsi les rayons de courbure sur les faces supérieure et inférieure du cylindre-arête de contact, le contact proprement dit se faisant sur la face inférieure (voir les figures 11a et 11b). On utilise par exemple la microscopie électronique à balayage (MEB) pour déterminer précisément les dimensions de l'arête de contact de la surface de contact arrondie et en particulier $r_1$ et $r_2$ supérieur et inférieur. D'autres techniques peuvent être utilisées pour déterminer ces dimensions.

En revenant à l'exemple de la figure 2, la surface de contact arrondie 20 a été fabriquée avec l'intention d'obtenir un cylindre de $5\mu m$ de rayon de courbure. Avec un angle d'inclinaison de 0.1°, on obtient les mesures suivantes par MEB :

$r_1$ supérieur = 5,85 $\mu m$
$r_1$ inférieur = 5,33 $\mu m$
$r_2$ supérieur = 2,06 $\mu m$
$r_2$ inférieur = 1,87 $\mu m$.

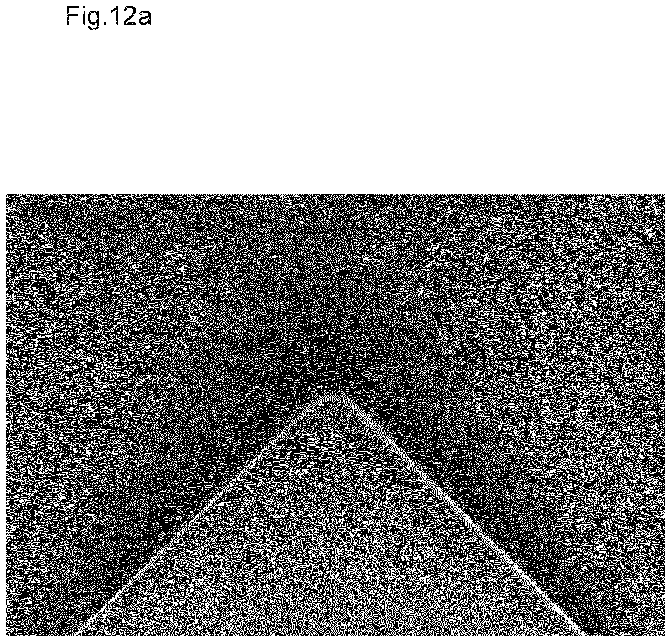

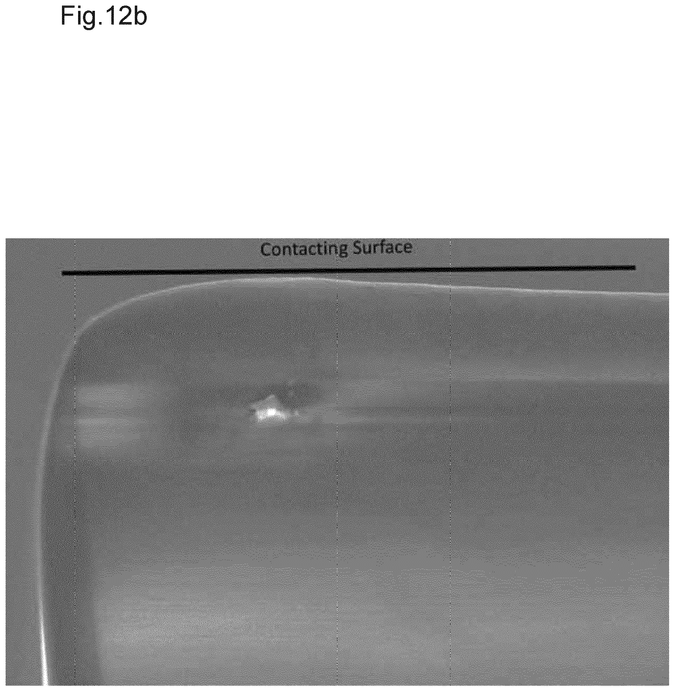

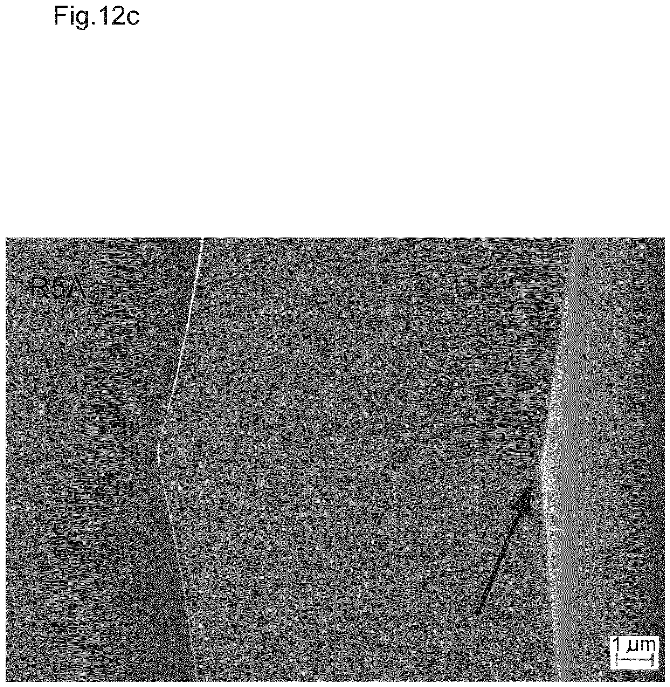

Les images MEB de la surface de contact arrondie 20 sont illustrées aux figures 12a (vue de côté perpendiculaire à la direction de glissement sur laquelle est visible $r_1$), 12b (vue de côté parallèle à la direction de glissement sur laquelle est visible $r_2$) et 12c (vue de face illustrant l'arête de contact, la flèche indiquant le point de contact avec la surface de contact plate 10).

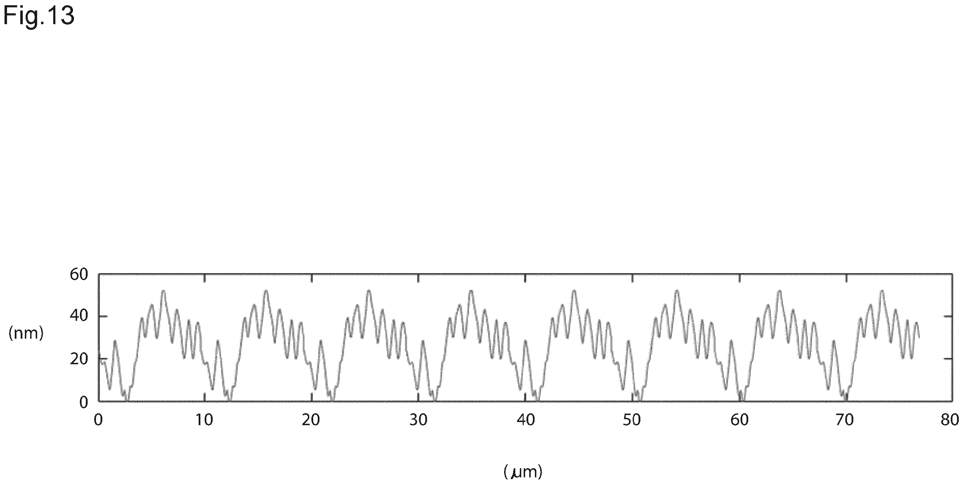

Pour déterminer précisément la topographie des surfaces de contact, on utilise de préférence l'image AFM, mais d'autres techniques équivalentes permettant de déterminer la topographie peuvent être utilisées. La figure 13 illustre le profil AFM de la surface de contact plate 10 dans une direction perpendiculaire un mouvement, ce profil AFM étant mis bout à bout ou cousu (stitched) de manière continue pour obtenir un profil complet utilisable dans la simulation numérique.

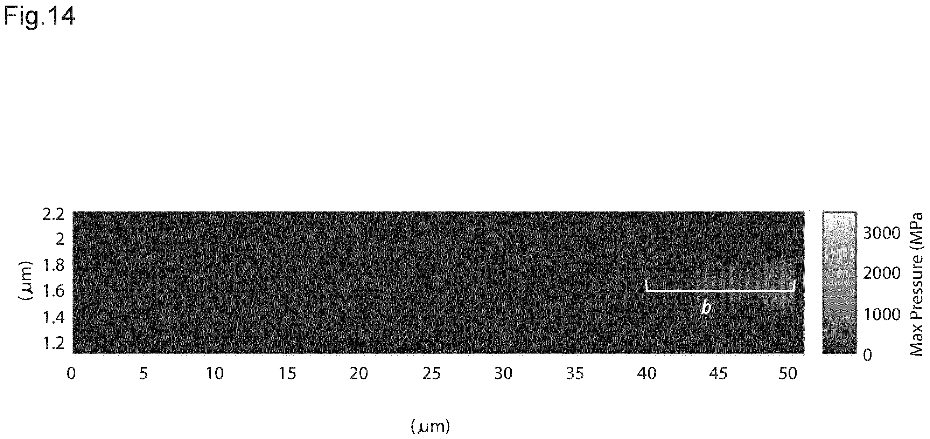

La méthode des éléments finis de frontières permet alors d'extraire l'aire de contact $A$ ainsi que la distribution de la pression de contact, l'aire de contact étant définie par la région où la pression de contact est supérieure à 0. On peut alors déterminer b comme étant la distance entre deux extrémités de l'aire de contact. Pour revenir à l'exemple qui illustre la méthode, avec une force normale de 1mN et un angle d'inclinaison $\theta$ = 0.1°, on obtient le graphique de la figure 14 qui permet de déterminer le paramètre b. A noter que cette méthode permet également d'extraire une valeur de r qui tient compte de l'angle d'inclinaison $\theta$.

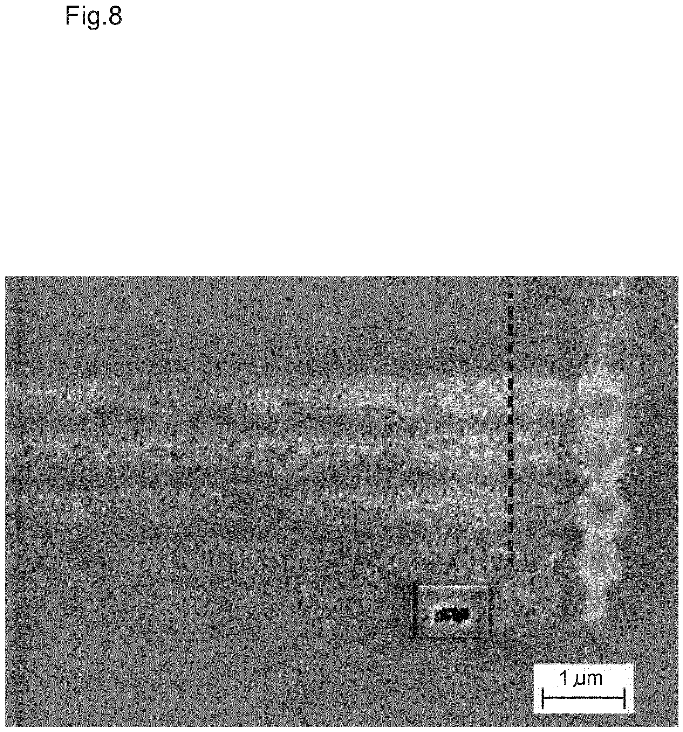

Une autre manière de déterminer b est basée sur l'expérience. De manière expérimentale, il est possible de déterminer les dimensions des traces d'usure sur la première surface de contact après un certain nombre de cycles de fonctionnement du système mécanique. Dans le cas particulier des systèmes mécaniques horlogers, les forces normales étant très faibles, l'usure est difficilement visible. Pour pouvoir visualiser la dimension de l'aire de contact, une option est alors d'effectuer un test de rayure (scratch test) avec les pièces micromécaniques du système mécanique étudié recouvertes d'or. La figure 8 illustre un tel test avec des pièces micromécaniques recouvertes par pulvérisation d'une couche de 3 nm d'or. Le test a duré le temps de 10 oscillations pour une force normale de 1 mN. Les régions claires sur cette figure indiquent là où l'or a été déformé plastiquement, les régions foncées représentent des zones où l'oxyde de silicium est apparent. La ligne pointillée correspond à la mesure de la largeur b de l'aire de contact.

Compte tenu des conditions de fonctionnement particulières du système mécanique, on peut encore définir une approximation pour b de la manière suivante :

$$b = 2\sqrt{r\delta_{max}}$$

avec $\delta_{max}$ la distance maximale de déformation verticale, qui est une grandeur mesurable sur le système ou pouvant être extraite par la méthode des éléments finis de frontière.

$\phi_0$ décrit l'état initiale d'adsorption à la première surface de contact. Si la première pièce micromécanique passe un certain temps à l'air libre dans l'environnement avant d'être mise en place et en fonction dans le système mécanique, on peut supposer que la totalité de la première surface de contact est contaminée donc $\phi_0$ = 1. C'est le cas pour l'exemple illustratif de la figure 2. A l'inverse, si la première pièce micromécanique subit un lavage immédiatement avant sa mise en fonction alors on peut supposer que $\phi_0$ = 0.

Troisième étape : application du modèle théorique pour modéliser l'évolution du COF dans le temps.

La troisième étape selon l'invention consiste à modéliser le COF et son évolution dans le temps pour le système mécanique concerné en appliquant un modèle particulier.

On commence par détailler le modèle et sa construction.

*Construction d'un modèle prédictif de frottement*

Sur la base de essais expérimentaux présentés plus haut, les inventeurs ont développé un modèle prédictif du frottement dans le temps.

Le frottement total au cours du fonctionnement du système mécanique a été décomposé en la somme de trois phénomènes :

$$\mu F_N \mathrm{d} = E_{ad} + E_{E_z} + E_{E_y}$$

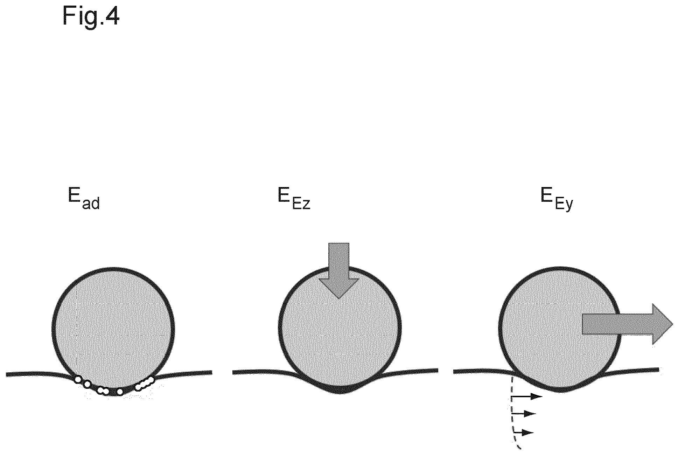

où $\mu$ est le COF de frottement, $F_N$ la force normale, d la distance de glissement, $E_{ad}$ l'énergie de cisaillement due à l'adhésion des aspérités des surfaces de contact, $E_{Ez}$ l'énergie dissipée lors de la restitution de la déformation élastique verticale et $E_{Ey}$ l'énergie élastique de déformation tangentielle. Ces trois énergies contribuant au frottement et les phénomènes qu'elles représentent sont illustrés de manière simplifiée à la figure 4.

*Adhésion*

$E_{ad}$ est l'énergie nécessaire pour vaincre le phénomène d'adhésion des aspérités des surfaces de contact et dépend de la contrainte de cisaillement de la première surface de contact. Elle prend en compte des contaminations de la surface par adsorption qui pourrait modifier la contrainte de cisaillement de la première surface de contact. On peut raisonnablement penser que la chimie de surface des surfaces de contact va varier au début et à la fin du fonctionnement du système mécanique ce qui pourrait caractériser le comportement à court terme du frottement et le phénomène de récupération.

En utilisant le modèle d'adsorption de Langmuir, le composant d'adhésion $E_{ad}$ est caractérisé par l'équation

$$E_{ad} = \mu_{ad} F_N \mathrm{d},$$

avec

$$\mu_{ad} = \left( \phi_0 e^{-(k_a p + k_r)t} + \frac{k_a p}{k_a p + k_r} \left( 1 - e^{-(k_a p + k_r)t} \right) \right)(\mu_1 - \mu_2) + \mu_2$$

où

$k_a$ est une constante caractérisant le taux d'adsorption à la surface de la première surface de contact;
$k_r$ est une constante caractérisant le taux d'enlèvement d'un contaminant à la surface de la première surface de contact;
t est le temps ;
p est la pression partielle des contaminants ;
$\mu_1$ est le COF de la première surface de contact entièrement contaminée,
$\mu_2$ est le COF de la première surface de contact entièrement propre.

*Déformation verticale*

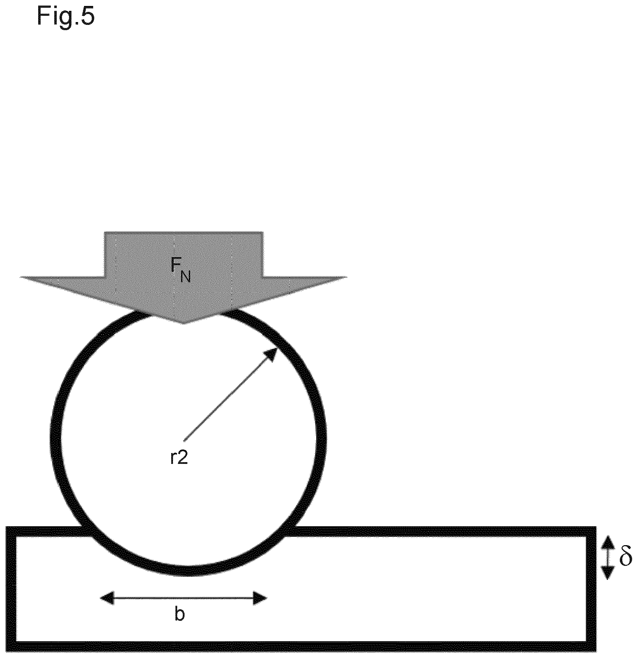

$E_{Ez}$ est l'énergie dissipée lors de la restitution de la déformation élastique dans la direction verticale, perpendiculaire au mouvement. Cette énergie peut être calculée sur la base des équations de Hertz pour les contacts mécaniques de type ball-on-flat. Ce type de contact est illustré à la figure 5. On obtient alors

$$E_{E_z} = \mu_{E_z} F_N \mathrm{b}$$

avec

$$\mu_{E_z} = \frac{\alpha}{b}\left(\frac{1}{r}\left(\frac{3F_N}{4E^*}\right)^2\right)^{\frac{1}{3}}$$

où

$\alpha$ est une constante caractérisant l'énergie élastique perdue et est une fonction des propriétés du matériaux et des conditions de contact ou conditions de fonctionnement. Elle vaut entre 0 et 1. Durant la récupération de la déformation élastique verticale, une partie de l'énergie peut se dissiper dans l'environnement. De manière conservatrice, on suppose donc que $\alpha = 1$.

$E^*$ est le module d'élasticité réduit, $E^* = \dfrac{E}{2(1-\nu^2)}$ avec E le module d'élasticité et v le coefficient de Poisson.

Selon les essais expérimentaux, la géométrie et la topographie des surfaces de contact ne changent pas et $E_{Ez}$ est donc constante dans le temps.

*Déformation tangentielle*

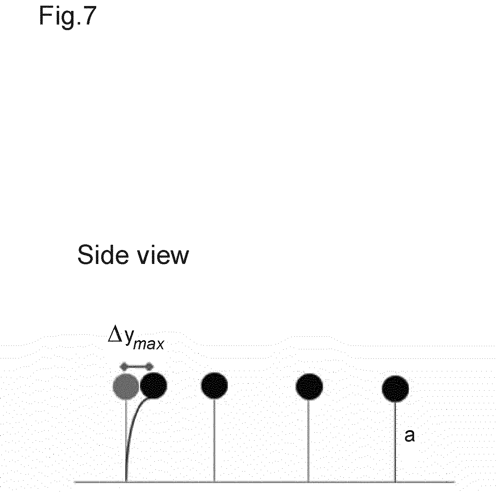

En ce qui concerne l'énergie de déformation tangentielle $E_{Ey}$, on suppose que pour des fissures suffisamment profondes à la première surface de contact,
les segments entre les fissures vont se comporter comme autant de poutres dites cantilever indépendantes les unes des autres de longueur *a* et de largeur *b*. La figure 7 illustre cela de manière schématique. On suppose que la force de glissement agit sur une poutre à la fois. En appliquant les modèles propres à la théorie des poutres, on obtient alors :

$$E_{E_y} = \mu_{E_y} F_N L$$

avec

$$\mu_{E_y} = \frac{2a^3 F_N \mu_{ad}}{EbL^4}$$

Ainsi, la composante du COF due à la déformation élastique tangentielle $\mu_{Ey}$ est proportionnelle au cube de la profondeur des fissures.
Lorsque des fissures apparaissent à la surface de contact, l'évolution dans le temps du frottement est liée à la croissance de ces fissures. On suppose que les fissures apparaissent et grandissent à chaque cycle du mouvement (un cycle correspond à un aller-retour pour un mouvement de glissement ou une rotation pour un mouvement de pivotement). On peut prédire la croissance des fissures en fonction du temps à l'aide de l'équation suivante :

$$a(t) = a_0 + \frac{2Lft}{v}\frac{da}{dt}$$

Il est aussi possible de prédire la croissance des fissures en fonction du nombre de cycle *N* :

$$a(N) = a_0 + N\frac{da}{dN}.$$

Par conséquent, le frottement total peut être caractérisé par la somme des composantes d'adhésion, de déformation verticale et de déformation tangentielle :

$$\mu = \mu_{ad} + \mu_{E_{E_z}} + \mu_{E_{E_y}}.$$

On obtient ainsi le modèle suivant permettant de prédire l'évolution du frottement dans le temps :

$$\mu(t) = \mu_{\text{ad}} + \frac{\alpha}{b}\left(\frac{1}{r}\left(\frac{3F_N}{4E^*}\right)^2\right)^{1/3} + \frac{2\left(a_0 + \frac{2Lft}{v}\frac{da}{dt}\right)^3 F_N\mu_{ad}^2}{EbL^4}$$

avec:

$$\mu_{\text{ad}} = \left(\phi_0 e^{-(k_a p + k_r)t} + \frac{k_a p}{k_a p + k_r}\left(1 - e^{-(k_a p + k_r)t}\right)\right)(\mu_1 - \mu_2) + \mu_2$$

Pour appliquer ce modèle à un système mécanique particulier, on commence par déterminer les paramètres propres au modèle qui n'ont pas été extrait durant la seconde étape de la méthode selon l'invention : $\alpha$, $k_a$, $p$, $k_r$, $a_0$, $a(t)$, $\mu_1$ et $\mu_2$.

Comme indiqué plus haut, on suppose $\alpha = 1$.

Les paramètres $\mu_1$ et $\mu_2$ décrivent le frottement pour deux états de surface différents de la première surface de contact : respectivement pour une surface entièrement contaminée et une surface entièrement propre. Ces paramètres vont dépendre de l'aire de contact réelle et de la contrainte de cisaillement de la surface de la première surface de contact. Ainsi, $\mu_2$ va dépendre uniquement de la contrainte de cisaillement du matériau de base de la première surface de contact tandis que $\mu_1$ va dépendre des contaminants présents et de leur interaction avec la première surface de contact. On peut exprimer ces paramètres de la façon suivante :

$$\mu_1 = \frac{\tau_1 A}{F_N}$$

et

$$\mu_2 = \frac{\tau_2 A}{F_N}$$

avec $\tau_1$ la contrainte de cisaillement de la première surface de contact contaminée et $\tau_2$ la contrainte de cisaillement de la première surface de contact propre. Ces paramètres sont de préférence déterminés expérimentalement ou tirés de la littérature.

On détermine le composant $k_a p$ qui traduit le taux d'absorption à la surface de la première surface de contact de préférence de manière expérimentale. Pour ce faire, on considère l'intervalle de temps durant une interruption du mouvement du système mécanique, intervalle durant lequel on a constaté expérimentalement le phénomène de récupération du COF. Dans cet intervalle, $k_r$ qui caractérise le taux d'enlèvement est nul puisqu'il n'y pas de mouvement relatif entre les pièces micromécaniques du système qui pourrait causer l'enlèvement de contaminants à la surface de la première surface de contact. On suppose encore que, dans cet intervalle de temps également, le taux de surface contaminée $\phi_0$ vaut 0 puisque l'interruption intervient après une période de mouvement qui a « nettoyé » la première surface de contact. Sur la base de mesures expérimentales, on peut alors utiliser la cinétique de Langmuir pour extraire le coefficient $k_a p$. On considère le changement du COF au cours d'une interruption du mouvement (on rappelle que $E_{Ez}$ est supposé constant) :

$$\Delta\mu = \Delta\mu_{E_y} + \Delta\mu_{ad}.$$

Or on a $\Delta\mu_{E_y} = C\Delta(\mu_{ad}^2)$ avec $C = \frac{aF_N}{2GbL^2}$ pour le cas du cisaillement élastique (fissures peu profondes)

$$C = \frac{2a^3 F_N}{EbL^4}$$

et     pour le cas d'un comportement des fissures du type poutre cantilever.

En considérant que $\Delta\mu_{ad} = \mu_{ad,final} - \mu_{ad,initial}$ et que $\mu_{ad,initial} = \mu_2$, on obtient la forme quadratique :

$$\Delta\mu = C(2\mu_2 + \Delta\mu_{ad})\Delta\mu_{ad} + \Delta\mu_{ad}$$

$$\Delta\mu = C(\Delta\mu_{ad})^2 + (2C\mu_2 + 1)\Delta\mu_{ad}$$

que l'on peut résoudre pour obtenir :

$$\Delta\mu_{ad} = \frac{-2C\mu_2 - 1 \pm \sqrt{(2C\mu_2 + 1)^2 + 4C\Delta\mu}}{2C}$$

Cette dernière équation permet d'extraire $\Delta\mu_{ad}$ à partir observations expérimentales. En utilisant l'expression de $\mu_{ad}$ détaillée ci-dessus, on peut aussi caractériser le changement dans la composante d'adsorption du COF en fonction du temps d'interruption $t_{int}$

$$\Delta\mu_{ad} = (1 - e^{-k_a p t_{int}})(\mu_1 - \mu_2).$$

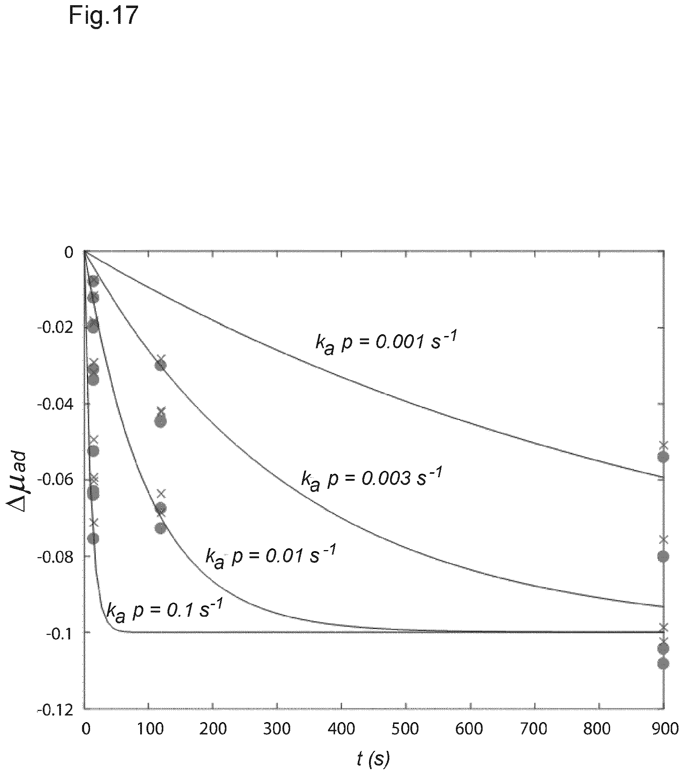

Avec les deux équations ci-dessus et les observations expérimentales, on peut alors extraire une plage de valeur plausible pour le composant $k_a p$. Dans le cas de l'exemple du système mécanique 100, la figure 17 illustre le lien entre $\Delta\mu_{ad}$ obtenu par la première des équations ci-dessus et le temps d'interruption $t_{int}$. Les lignes continues représentent le changement de frottement tel que modélisé par le modèle pour différentes valeurs de $k_a p$. Les points et les croix représentent les valeurs expérimentales obtenues pour $\mu_{ad}$. Les temps d'interruptions sont de 15 s, 120 s et 900 s. On constate que les valeurs de $k_a p$ déterminées par la seconde équation ci-dessus qui collent le plus raisonnablement aux données expérimentales sont comprises entre 0.001 s$^{-1}$ et 0.1s$^{-1}$.

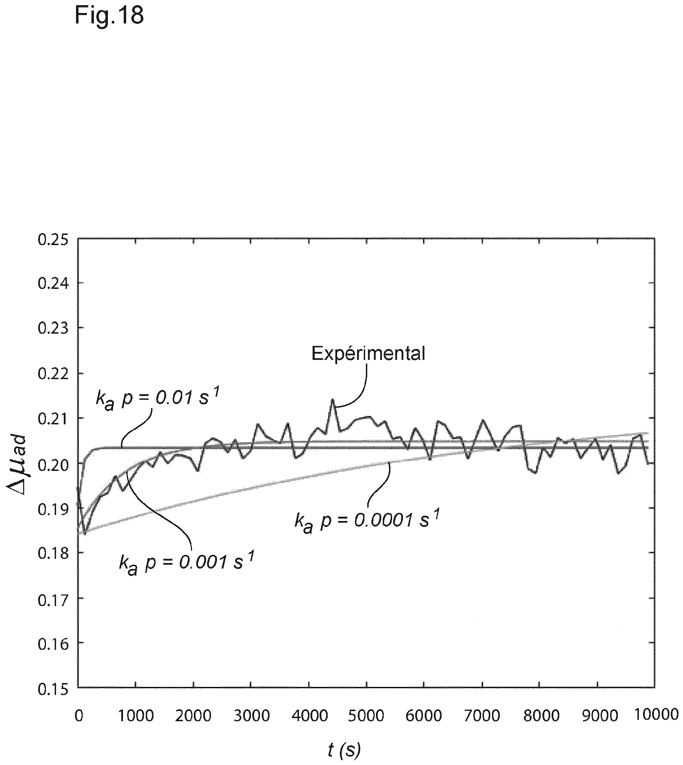

Le taux d'enlèvement représenté par $k_r$ dans le modèle décrit le taux d'enlèvement d'un contaminant à la surface de la première surface de contact. De préférence, on détermine $k_r$ expérimentalement après avoir déterminé $k_a p$ et $\mu_1$. Dans l'exemple illustré, avec $\mu_1$ fixé à 0.18 (selon la littérature ou calculé expérimentalement comme le COF initial moyen) et $\phi_0$ fixé à 1, on obtient une première valeur de $k_r$ de 0.0026 s$^{-1}$ pour $k_a p$ fixé à 0.01s$^{-1}$. Avec $k_a p$ fixé à 0.0001 s$^{-1}$, la valeur de $k_r$ passe à 3.5 $\times 10^{-5}$ s$^{-1}$. Enfin avec $k_a p$ fixé à 0.001 s$^{-1}$, la valeur de $k_r$ passe à 2.6 $\times 10^{-4}$ s$^{-1}$. La figure 18 représente la composante d'adhésion du COF $\mu_{ad}$ en fonction du temps t. Le tracé foncé représente le résultat expérimental pour le système mécanique 100 de la figure 2 avec les conditions $F_N = 1mN$ et $f = 1Hz$. Les trois autres tracés représentent les résultats calculés par le modèle pour $k_a p = 0.01s^{-1}$, $k_a p = 0.001s^{-1}$ et $k_a p = 0.0001s^{-1}$ (lecture de haut en bas par rapport à la figure 18). On constate sur la figure 18 que la meilleure approximation est la combinaison $k_a p = 0.001s^{-1}$ et $k_r = 2.6 \times 10^{-4}s^{-1}$.

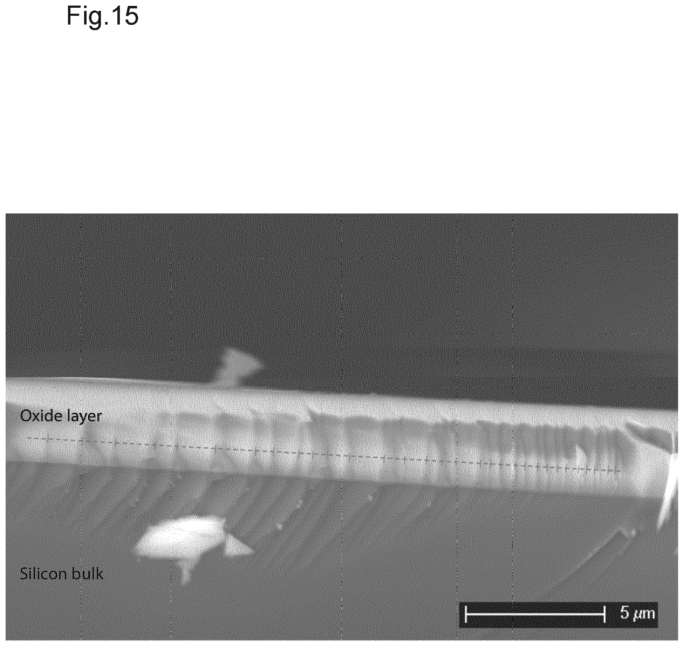

L'espacement des fissures $L$ est de préférence déterminé expérimentalement ou tiré de la littérature. Par exemple avec le système mécanique 100 tel que défini plus haut et illustré à la figure 2, on remarque des fissures espacées en moyenne de 0.66 $\mu m$ lorsque l'on brise la seconde pièce mécanique à la main (figure 15, coupe par SEM). On obtient ainsi une approximation grossière pour $L$ que l'on peut supposer être dans un ordre de grandeur plus ou moins égal au 0.66 $\mu m$ observé.

Il est possible d'obtenir une approximation d'un intervalle pour la longueur des fissures $a$ en utilisant le modèle de propagation des fissures dans les matériaux fragiles de Bower & Fleck. L'équation de ce modèle permet de déterminer la contrainte de compression critique $p_{max}^{frac}$ nécessaire pour une propagation critique des fissures :

$$p_{max}^{frac} = \frac{K_{IC}}{1.121\sqrt{\pi a[\mu(2 - 2.5\sqrt{a/b}) - 1.5\sqrt{a/b} + 2a/b]}}$$

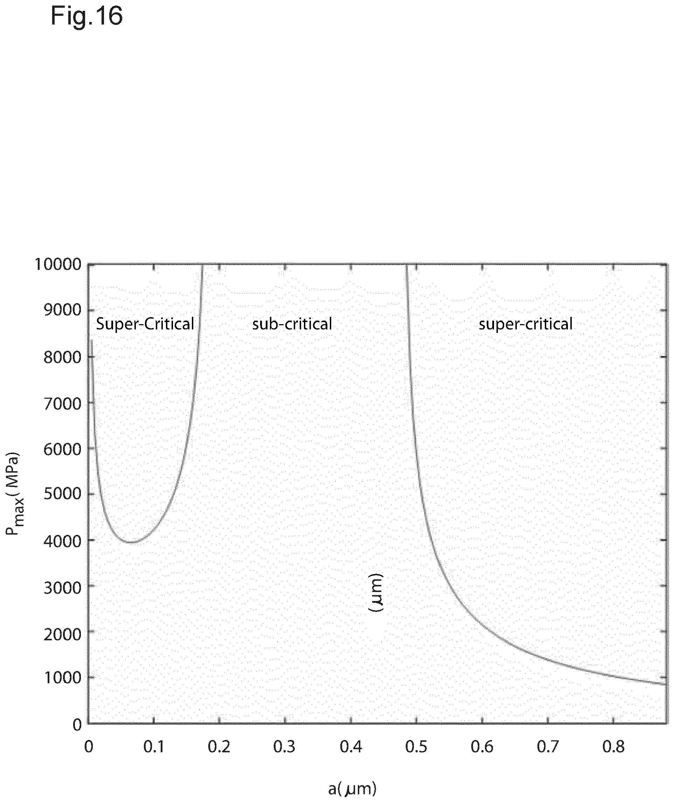

En appliquant cette équation à l'exemple illustratif, on a $K_{IC}$ = 0.77 MPa/m$^{1/2}$ pour l'oxyde de silicium. Avec la valeur de *b* déterminée ci-dessus, on obtient le graphique de la figure 16 qui illustre les zones critiques de propagation des fissures. Avec une force normale de 1mN, la méthode des éléments finis de frontière indique que la pression durant le fonctionnement du système mécanique 100 ne dépasse pas 2000 MPa. Ainsi, on obtient une longueur critique des fissures a$_{crit}$ de 0.6 $\mu m$ (voir figure 16). On peut donc en déduire que les fissures qui apparaissent à la surface de la première surface de contact plate 10 ont une longueur qui reste inférieure à cette longueur critique de 0.6 $\mu m$.

Comme on l'a vu plus haut, les deux composants du modèle qui dépendent du temps sont $\mu_{ad}$ et *a*. En effet, l'évolution du frottement à long terme dépend de la dimension des fissures et de leur croissance. On rappelle que la dimension des fissures dans le temps est donné donné par

$$\mathrm{a}(t) = a_0 + \frac{2Lft}{v}\frac{da}{dt}$$

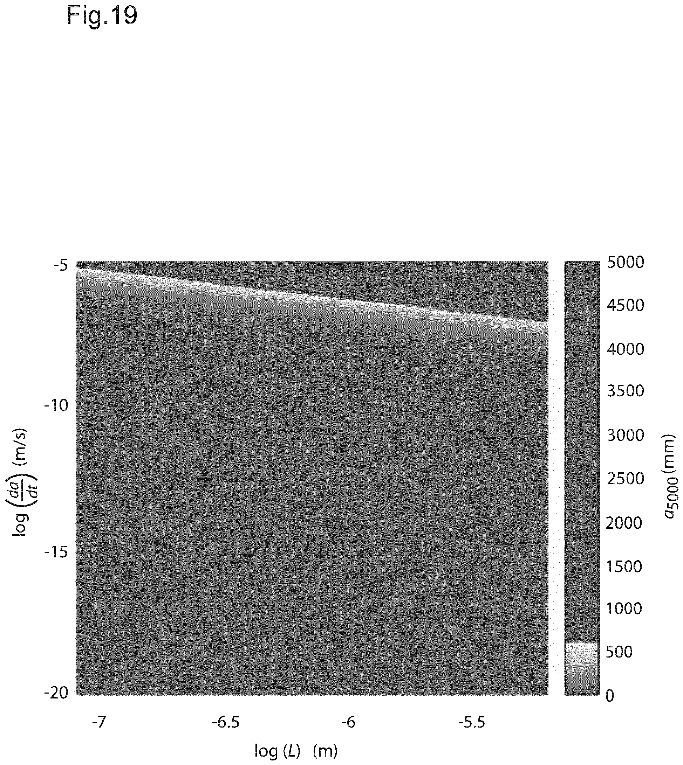

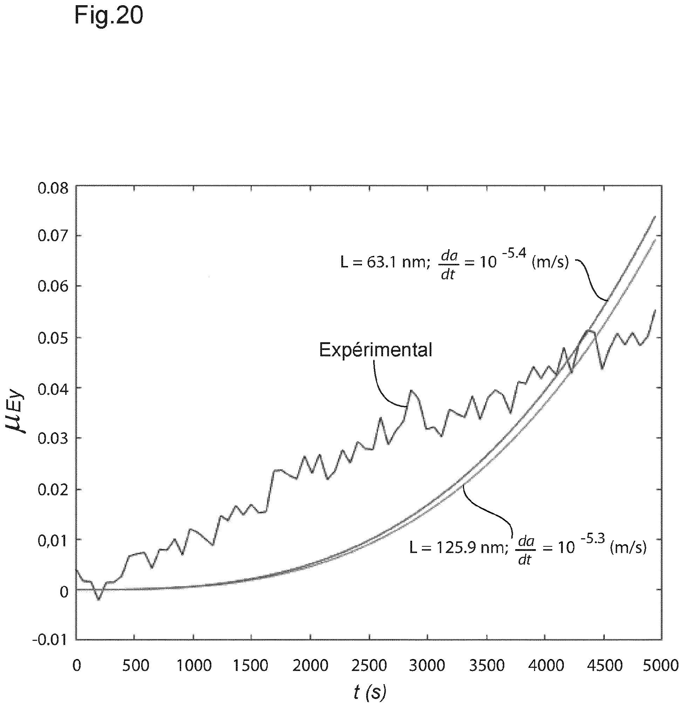

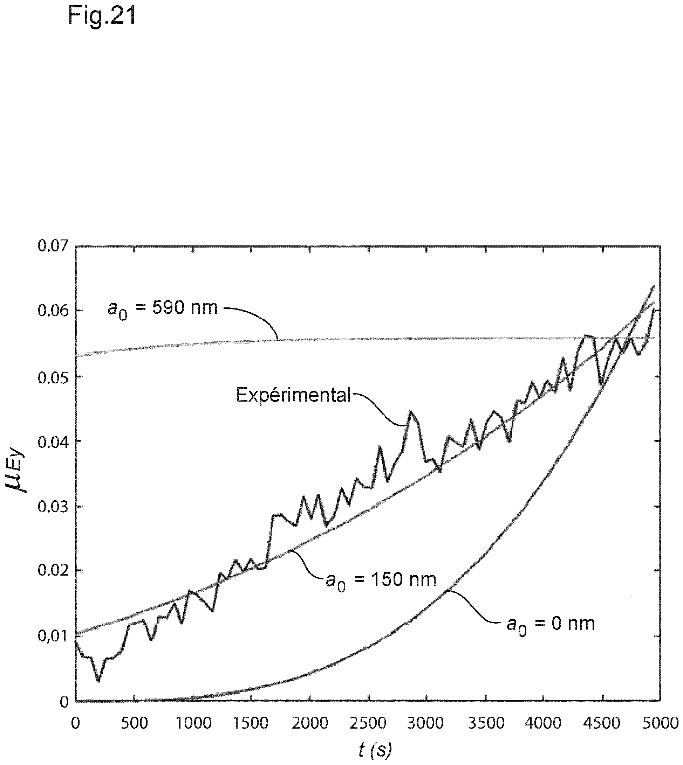

où $a_0$ est la dimension initiale des fissures et $\frac{da}{dt}$ est le taux de croissance. On peut supposer que $\frac{da}{dt}$ est constant. On peut également supposer comme postulat initial que $a_0$ vaut 0 (on pourra par la suite faire varier cette valeur). En outre, $a(t)$ ne va pas dépasser la valeur a$_{crit}$ déterminée ci-dessus (pour tout *t* supérieur ou égal à 0). Dans ces conditions et sur la base des informations fournies par la littérature, il est possible de déterminer une plage de valeurs plausibles pour $\frac{da}{dt}$ et d'affiner la valeur de *L*. Par exemple, on a étudié la vitesse sous-critique de fissures pour la silice vitreuse et la littérature indique que cette vitesse est inférieure à 10$^{-5}$m/s. Ainsi, pour l'exemple du système mécanique 100 en oxyde de silicium, on peut supposer que $\frac{da}{dt}$ est proche de cette valeur. La figure 19 illustre les valeurs de a(5000) (a après 5000 cycles de fonctionnement du système mécanique 100) en fonction de $\frac{da}{dt}$ et *L,* pour des valeurs plausibles de $\frac{da}{dt}$ et *L,* c'est-à-dire inférieurs à 10$^{-5}$m/s et d'un ordre de grandeur de 0.66$\mu m$. La région au-dessus de la ligne dans la figure 19 correspond à une valeur de *a* supérieure à a$_{crit}$ = 0.6 $\mu$m. On obtient donc, dans le cas de l'exemple, *L* compris entre 63.1 nm et 125.9 nm et $\frac{da}{dt}$ compris entre 10$^{-5.4}$ m/s et 10$^{-5.3}$ m/s. La figure 20 compare les résultats expérimentaux avec l'application du modèle pour les valeurs extrêmes des intervalles de validité déterminés pour *L* et $\frac{da}{dt}$ avec $a_0$ = 0. On remarque que la pente est quasi identique entre les résultats modélisés et expérimentaux. Une fois les intervalles de validité établis pour L et $\frac{da}{dt}$, il est possible de faire varier la valeur de $a_0$, la seule restriction étant que $a_0$ est toujours inférieur à a$_{crit}$ (0.6 $\mu$m dans l'exemple). La figure 21 illustre différentes valeurs de $a_0$ pour l'exemple du système mécanique 100 en comparaison avec les résultats expérimentaux.

Comme on l'a vu ci-dessus, il est donc possible de déterminer pour chaque paramètre du modèle une plage de valeurs réalistes, c'est-à-dire qui correspond aux conditions du système mécanique considéré, à partir des propriétés intrinsèques du système mécanique et de ses composants (matériaux, géométrie, topographie de surface, mauvais alignement...), de simulations et/ou de données fournies par la littérature. Il est possible d'affiner ces valeurs pour converger le plus possible vers des résultats expérimentaux, s'ils sont disponibles.

Une fois tous les paramètres déterminés, on peut les rassembler dans l'équation du modèle permettant de prédire l'évolution du COF pour calculer $\mu(t)$ pour le système mécanique concerné. Le modèle prédit le COF avec une précision de $\pm$ 0.05, écart typiquement rencontré dans les mesures expérimentales de COF, la précision pouvant même aller jusqu'à $\pm$ 0.025.

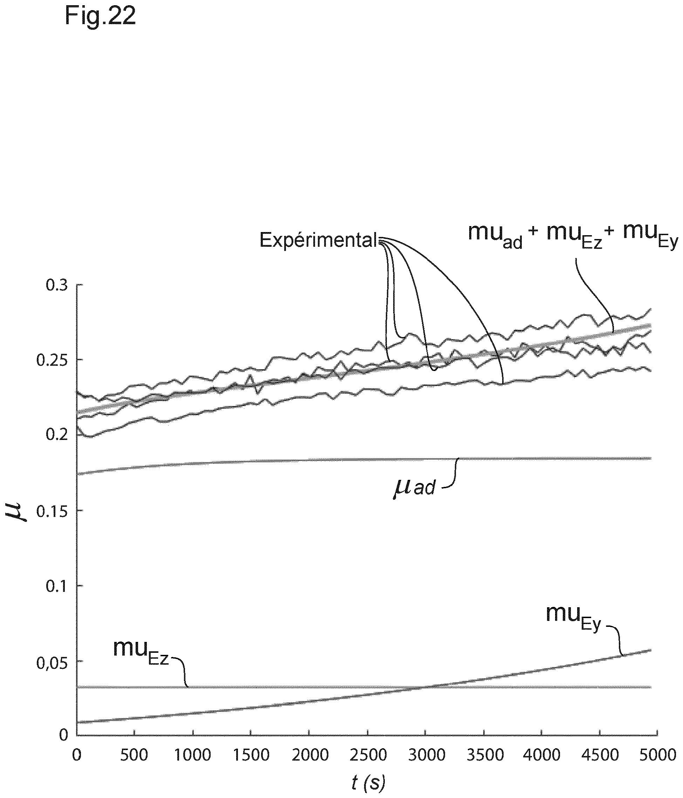

La figure 22 illustre le COF obtenu par expérimentations et par modélisation (trait gras) par la méthode selon l'invention pour le système mécanique 100 de la figure 2 avec les paramètres déterminés ci-dessus et pour 5000 cycles. Plusieurs répétitions de la même expérience sont représentées sur la figure 22, ainsi que chacun des trois composants du modèle $\mu_{ad}$, $\mu_{Ey}$ et $\mu_{Ez}$.

Comme on le constate avec l'exemple détaillé, la méthode selon l'invention permet donc de modéliser et donc de prédire l'évolution du COF pour un système mécanique formé d'au moins deux pièces micromécaniques, le système mécanique présentant les caractéristiques suivantes :

- Type de frottement : glissement et/ou roulement ;
- Géométrie des surfaces de contacts avec une première surface de contact et une seconde surface de contact arrondie et bombée et telles qu'il est possible de calculer les déformations élastiques selon la théorie de Hertz ;
- Matériaux : matériaux qui se comportent de manière purement élastique (sans déformation plastique) dans les conditions de fonctionnement du système mécanique (en particulier force normale), comme les matériaux fragiles et plus particulièrement le silicium ou le dioxyde de silicium.

L'avantage de la méthode et du modèle selon l'invention est qu'il établit un lien direct entre le COF et des paramètres mesurables et liés aux propriétés mécaniques du système comme la géométrie et la topographie de surface des pièces micromécaniques du système, notamment le rayon caractéristique de la surface de contact arrondie $r_1$, $r_2$ et l'aire de contact réelle $A$.

Variante : Etape additionnelle

Une fois les paramètres du modèle déterminés, il est possible d'en faire varier certains pour déterminer leur influence sur le COF et prédire l'évolution du COF sous ces nouvelles conditions.

*Angle d'inclinaison*

Par exemple, l'angle d'inclinaison de la seconde surface de contact arrondie par rapport à la première surface de contact va changer parfois de manière significative les caractéristiques du contact comme l'aire de contacte réelle $A$ ou les paramètres $b$, $r_1$, $r_2$ et donc $\mu_{Ez}$. Par conséquent, en partant d'un système mécanique donné pour lequel on a appliqué la méthode selon l'invention, on peut ensuite, dans une étape additionnelle, fixer un ou plusieurs autres angles d'inclinaison entre les première et seconde surfaces de contact , calculer, par exemple avec la méthode des éléments finis de frontière détaillée ci-dessus, les valeurs correspondantes pour l'aire de contacte réelle et appliquer le modèle avec ces nouvelles valeurs, les autres paramètres restants inchangés. On peut alors déterminer l'influence du mauvais alignement sur le COF et son évolution.

Garantir un alignement parfait des pièces demande de gros efforts, et en modélisant l'évolution du COF en fonction de l'angle d'inclinaison, il est possible de trouver un équilibre entre un angle d'inclinaison raisonnable (c'est-à-dire pour lequel les efforts de fabrication/montage sont acceptables/faisables) et un COF le plus optimal possible. On peut en effet imaginer que certaines valeurs d'angle d'inclinaison ne soient pas applicables aux conditions de fonctionnement ou de fabrication du système mécanique même si théoriquement, elles conduisent à un meilleur COF.

Dans l'exemple détaillé du système mécanique 100 de la figure 2, on a appliqué le modèle pour un angle d'inclinaison $\theta = 0.1°$. On propose d'appliquer à nouveau le modèle pour $\theta = 0.01°$ et $\theta = 1°$. On commence par déterminer à nouveau $P_{max}$, $A$, $b$ et $\delta$ pour chacun de ces cas (méthode des éléments finis de frontière). Le tableau ci-dessous détaille ces valeurs :

| Angle (°) | $P_{max}$ [GPa] | $A$ [$\mu m^2$] | $b$ [$\mu m$] | $\delta$ [nm] |
|---|---|---|---|---|
| 0.01 | 0.96 | 2.97 | 52.0 | 9.45 |
| 0.1 | 1.35 | 1.91 | 10.4 | 19.7 |
| 1 | 2.24 | 1.04 | 2.1 | 35.7 |

On constate que l'aire de contact réelle augmente plus l'angle d'inclinaison est faible.

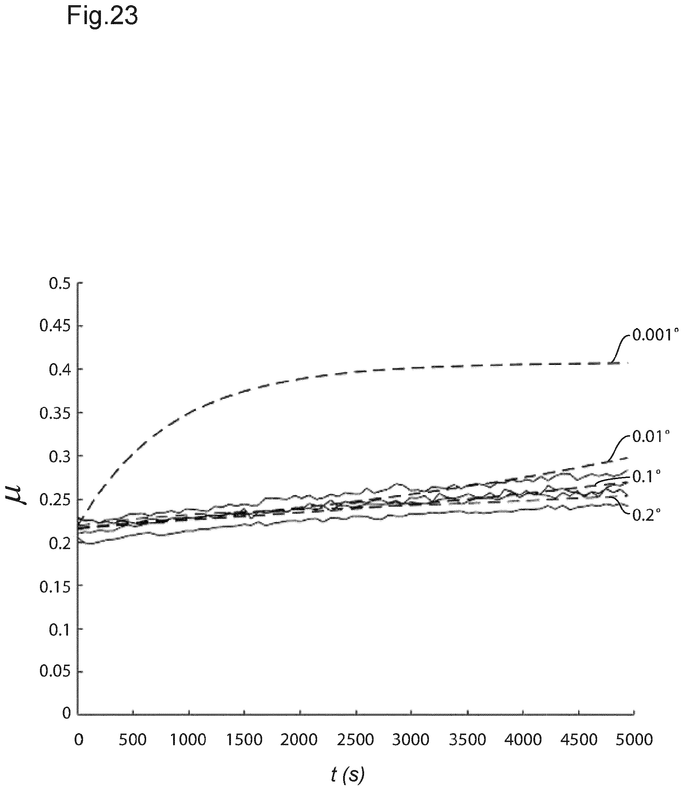

La figure 23 illustre la modélisation de l'évolution du COF pour différentes valeurs d'angle d'inclinaison et la compare avec les résultats expérimentaux obtenus pour un angle d'inclinaison de 0.1° ($F_n = 1mN$). Comme on pouvait s'y attendre, l'augmentation de l'aire de contact réelle entraîne une augmentation significative du COF. Cela suggère qu'il n'est pas forcément optimal de chercher l'alignement parfait dans le cas du système mécanique 100.

*Force normale*

Il est également possible de faire varier la force normale $F_N$ et d'étudier l'effet de la force normale sur l'évolution de COF. Un changement dans la force normale induit un changement dans la pression entre les contacts, l'aire de contact réelle et b. Ainsi, pour une nouvelle valeur de $F_N$ donnée, il suffit d'extraire à nouveau les paramètres $P_{max}$, $A$, $b$ et $\delta$ puis d'appliquer une nouvelle fois le modèle à ces paramètres modifiés, les autres paramètres restants constants. Il est ainsi possible de modéliser et prédire l'impact sur le COF d'une augmentation ou diminution de la force normale pour le système mécanique considéré.

*Rayon de la surface de contact arrondie*

Dans une autre variante encore, on fait varier le rayon de courbure $r_1$ caractéristique du cylindre auquel est assimilée la seconde surface de contact arrondie. Dans le cas de l'exemple considéré, on avait mesuré sur la surface de contact arrondie 20 $r_1 = 5\mu m$. On va modéliser le COF pour des valeurs $r_1$ de $10\mu m$ et 20 $\mu m$, les autres paramètres étant constants. La méthode des éléments finis de frontière permet d'extraire les valeurs de $P_{max}$, $A$, $b$ et $\delta$ associées à ces valeurs de $r_1$, et pour $F_N = 1mN$ et $\theta = 0.1°$. Ces valeurs sont rassemblées dans le tableau ci-dessous.

| $r_1$ [$\mu$m] | $P_{max}$ [GPa] | $A$ [$\mu$m$^2$] | $b$ [$\mu$m] | $\delta$ [nm] |
|---|---|---|---|---|
| 5 | 1.35 | 1.91 | 10.4 | 19.7 |
| 10 | 1.14 | 2.38 | 10.3 | 21.5 |
| 20 | 0.98 | 2.57 | 6.9 | 25.7 |

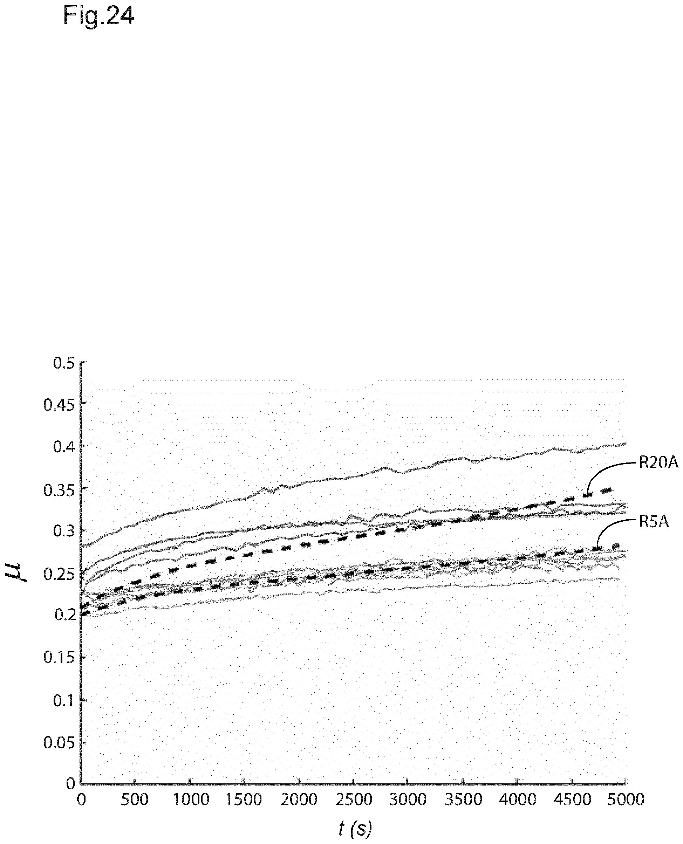

Les résultats de la modélisation du COF sont illustrés à la figure 24 : les tracés en pointillés sont obtenus par le modèle pour $r_1 = 5\mu m$ et $r_1 = 20\mu m$ et les deux groupes de tracés continus correspondent aux résultats expérimentaux obtenus avec des échantillons de système mécanique caractérisé par $r_1 = 5\mu m$ (tracés clairs) et $r_1 = 20\mu m$ (tracé foncé). Le modèle permet donc de conclure que, pour le système mécanique 100 étudié, le COF augmente si le rayon caractéristique de la pointe 20 augmente.

*Traitement de surface*

Il est également possible grâce au modèle et à la méthode selon l'invention, d'étudier l'effet de certains traitements de surface sur les surfaces de contact. Dans l'exemple illustratif, la surface de contact plate 10 est considérée dans son état « tel que livrée », c'est-à-dire sans traitement post fabrication. Il est possible d'évaluer l'impact sur le COF d'un traitement de surface comme le lavage à l'eau, le lavage à l'alcool isopropylique ou un revêtement de surface ou l'apport d'un lubrifiant externe ( considéré comme un traitement de surface dans le sens où le lubrifiant va modifier les propriétés des surfaces de contact). Chacun de ces traitements va impliquer une modification de certains paramètres du modèle notamment $\mu_1$, $k_r$, $k_a p$ ainsi que $\dfrac{da}{dt}$. On peut par exemple évaluer ces paramètres pour différents traitements de surface sur la base de données expérimentales ou trouvées dans la littérature. Par exemple, on sait qu'avec un revêtement organique, le frottement est quasi constant dans le temps, ce qui implique que dans ce cas $k_r = 0$. Ainsi, le modèle selon l'invention va notamment permettre de déterminer si un traitement de surface est opportun pour l'optimisation du COF et de choisir lequel parmi plusieurs options. Il est donc notamment possible de déterminer si l'ajout d'un lubrifiant est favorable et dans quelle mesure.

*Topographie de surface*

Dans encore une autre variante, il est possible d'évaluer l'impact de la topographie de la première surface de contact sur l'évolution du COF dans le temps. On peut notamment faire varier la rugosité de la première surface de contact. Comme précédemment, on détermine, par la méthode des éléments finis de frontière par exemple, pour chaque valeur de rugosité considérée les valeurs correspondantes pour $P_{max}$, $A$, $b$ et $\delta$, les autres paramètres du modèle restants inchangés. En appliquant le modèle à ces valeurs mise à jour, on peut évaluer et modéliser le COF en fonction de la rugosité de la première surface de contact. Dans le cas des matériaux fragiles, la topographie de surface et la rugosité sont des paramètres que l'on maîtrise à la fabrication et qu'il est donc très intéressant d'optimiser en vue d'atteindre un COF optimal.

Par conséquent, dans une étape additionnelle de la méthode selon l'invention, on applique la méthode à un deuxième système mécanique (qui peut être purement théorique), quasi similaire au premier système mécanique, pour lequel on considère une variation de l'une au moins des conditions initiales suivantes : force normale $F_N$, angle d'inclinaison θ, rugosité de la première surface de contact, rayon caractéristique de la seconde surface de contact arrondie *r*, traitement de surface de la première surface de contact, les autres conditions restants inchangées par rapport au premier système mécanique. On détermine ensuite les paramètres du modèle qui sont modifiés par ces nouvelles conditions initiales, pour pouvoir appliquer le modèle à ce second système mécanique et en modéliser son COF. On peut alors comparer les COF modélisés et choisir le système mécanique optimal.

Dans une variante de la méthode, une fois le COF modélisé pour un système mécanique donné, il est possible à partir du modèle d'extraire des valeurs optimales pour au moins un des paramètres caractéristiques du système mécanique permettant d'obtenir un COF déterminé.

Dans une étape supplémentaire, on peut alors fabriquer un nouveau système mécanique optimal présentant les paramètres caractéristiques optimaux déterminés. De préférence, on utilise un procédé de fabrication par gravure sélective de la surface, comme la gravure ionique réactive profonde (DRIE) ou une méthode laser comme la méthode DLIP. On peut également citer d'autres procédés de fabrication qui permettent de contrôler les états de surface comme la lithographie colloïdale ou la déposition de couches.

Conclusion

Le modèle et la méthode selon l'invention permettent de faire le lien entre le frottement et les caractéristiques mécaniques des surfaces de contact du système mécanique. En particulier, pour une application de la méthode dans le domaine horloger, l'homme du métier peut aisément à l'aide de la méthode selon l'invention modéliser l'impact sur le COF de la géométrie de contact, de la topographie des contacts, des conditions d'alignement, de la force normale ou d'un traitement de surface et déterminer des conditions optimales pour le système mécanique considéré. Or, l'homme du métier a un contrôle direct sur ces conditions particulières : la géométrie et la topographie des contacts dépendent du procédé de fabrication tandis que la force normale et l'angle d'inclinaison se règlent au moment du montage du système mécanique. Ainsi, contrairement aux modèles connus jusqu'à présent, la méthode selon l'invention offre une modélisation du COF complète (tous les phénomènes influents sont considérés) et directement liée aux propriétés mécaniques et chimiques du système mécanique qui permet à l'homme du métier de déterminer concrètement les paramètres optimaux pour la géométrie et la topographie de surface des contacts qui vont tendre vers un COF optimal.

**Revendications**

**1.** Méthode de modélisation du coefficient de frottement d'un système mécanique comprenant les étapes suivantes :

i. Fournir un premier système mécanique (100) comprenant au moins deux pièces micromécaniques (1, 2), la première pièce micromécanique (1) présentant une première surface de contact (10) tandis que la seconde pièce micromécanique (2) présente une seconde surface de contact arrondie ou bombée (20), les première et seconde pièces micromécaniques (1, 2) étant agencées pour se déplacer l'une par rapport à l'autre de sorte que les première et seconde surfaces de contact (10, 20) glissent ou roulent l'une sur l'autre, les matériaux des première et seconde surfaces de contact (10, 20) ainsi que les conditions de contact étant tels que le régime de déformation est purement élastique, la première surface de contact (10) présentant en outre une géométrie telle qu'il est possible d'appliquer la théorie de Hertz pour calculer les déformations élastiques ;
ii. Déterminer les paramètres caractéristiques suivants du premier système mécanique (100) :

- $E$, le module d'élasticité du matériau de la première surface de contact de la première pièce micromécanique ;
- $G$, le module de cisaillement du matériau de la première surface de contacte de la première pièce micromécanique ;
- $v$, le coefficient de Poisson du matériau de la première surface de contacte de la première pièce micromécanique ;
- $v$, la vitesse du mouvement relatif entre les première et seconde pièces micromécaniques ;
- $F_N$, la force normale entre les première et seconde pièces micromécaniques ;
- $f$, la fréquence du mouvement relatif entre les première et seconde pièces micromécaniques ;
- $A$, l'aire de contact réelle entre les première et les seconde surfaces de contact ;
- $b$, la largeur de l'aire de contact réelle A entre les première et les seconde surfaces de contact ;
- $θ$, l'angle d'inclinaison de la seconde surface de contact arrondie par rapport à la première surface de contact;
- $\phi_0$, une constante entre 0 et 1 caractérisant le taux initial de la première surface de contact couvert par des contaminants adsorbés;

∘ $r$, le rayon de courbure caractéristique de la seconde surface de contact arrondie ;

iii. Modéliser le COF en fonction du temps par l'équation suivante :

$$\mu(t) = \left( \phi_0 e^{-(k_a p + k_r)t} + \frac{k_a p}{k_a p + k_r}\left(1 - e^{-(k_a p + k_r)t}\right) \right)(\mu_1 - \mu_2) + \mu_2$$

$$+ \frac{\alpha}{b}\left(\frac{1}{r}\left(\frac{3F_N}{4E^*}\right)^2\right)^{1/3} + \frac{2\left(a_0 + \frac{2Lft}{v}\frac{da}{dt}\right)^3 F_N \mu_{ad}^2}{EbL^4}$$

avec

$$\mu_{ad} = \left( \phi_0 e^{-(k_a p + k_r)t} + \frac{k_a p}{k_a p + k_r}\left(1 - e^{-(k_a p + k_r)t}\right) \right)(\mu_1 - \mu_2) + \mu_2$$

où $k_a$ est une constante caractérisant le taux d'adsorption à la surface de la première surface de contact; $k_r$ est une constante caractérisant le taux d'enlèvement d'un contaminant à la surface de la première surface de contact;
t est le temps ;
p est la pression partielle des contaminants ;
$\mu_1$ est le COF de la première surface de contact entièrement contaminée ;
$\mu_2$ est le COF de la première surface de contact entièrement propre ;
$\alpha$ est une constante caractérisant l'énergie élastique perdue et vaut entre 0 et 1 ;
$E^*$ est le module d'élasticité réduit, $E^* = \frac{E}{2(1-\nu^2)}$ ;
a est la profondeur des fissures à la surface de la première surface de contact ; et
L est une distance qui caractérise l'espacement entre les fissures à la surface de la première surface de contact.

iv. Fournir un deuxième système mécanique (concret ou théorique) quasi identique au premier système mécanique mais pour lequel un au moins des paramètres caractéristiques suivants est changé, les autres paramètres caractéristiques restant inchangés : force normale $F_N$, angle d'inclinaison $\theta$, aire de contact réelle $A$, rayon caractéristique de la seconde surface de contact arrondie $r$, largeur $b$ de l'aire de contact réelle $A$, le taux initial de la surface de la première surface de contact couvert par des contaminants adsorbés $\phi_0$ ;
v. Appliquer les étapes i à iii de la méthode au deuxième système mécanique pour obtenir une modélisation du COF correspondante
vi. Comparer les COF modélisés des premier et second systèmes mécaniques pour déterminer le COF et donc le système optimal.

2. Méthode selon la revendication 1 **caractérisée par le fait qu'**elle comprend en outre l'étape suivante
vii. Déterminer à partir du COF modélisé à l'étape iii, des valeurs optimales pour au moins un des paramètres caractéristiques du système mécanique afin d'obtenir un COF déterminé et de préférence, pour au moins un des paramètres suivants : force normale $F_N$, angle d'inclinaison $\theta$, aire de contact réelle $A$, rayon caractéristique de la seconde surface de contact arrondie $r$, largeur $b$ de l'aire de contact réelle $A$, le taux initial de la surface de la première surface de contact couvert par des contaminants adsorbés $\phi_0$.

3. Méthode selon la revendication 2, **caractérisée par le fait qu'**elle comprend en outre l'étape suivante :
viii. Fabriquer un système mécanique selon les valeurs optimales déterminées à l'étape vii.

4. Méthode selon la revendication 3, **caractérisée par le fait que** le système mécanique est fabriqué à l'aide de l'un des procédés de fabrication suivants : gravure sélective de la surface, de préférence, gravure ionique réactive profonde (DRIE), méthode laser, de préférence DLIP, lithographie colloïdale ou déposition de couches.

5. Méthode selon l'une des revendications précédentes, **caractérisée par le fait que** la géométrie de la première surface de contact de la première pièce micromécanique est essentiellement plate, ou convexe ou concave.

6. Méthode selon l'une des revendications précédentes, **caractérisée par le fait que** la géométrie des première et seconde surfaces de contact est telles que le contact entre les première et seconde surfaces de contact est assimilable à l'un des types suivants : cylindre sur cylindre, bille sur bille, bille sur plat, cylindre sur plat, surface convexe sur surface concave.

7. Méthode selon l'une des revendications précédentes, **caractérisée par le fait que** les première et seconde pièces micromécaniques sont réalisées en matériaux fragiles.

8. Méthode selon la revendication précédente, **caractérisée par le fait que** les première et seconde pièces micromécaniques sont réalisées en silicium ou oxyde de silicium.

9. Méthode selon l'une des revendications précédentes, **caractérisée par le fait que** les paramètres caractéristiques du système mécaniques sont obtenus soit par essais expérimentaux, soit par mesure, soit par simulation, soit sont extraits de la littérature ou une combinaison de l'une ou l'autre de ces sources.

10. Méthode selon l'une des revendications précédentes, **caractérisée par le fait que** le système mécanique est un mécanisme horloger destiné à équiper un mouvement d'horlogerie.

## Patentansprüche

1. Verfahren zur Modellierung des Reibungskoeffizienten eines mechanischen Systems, das die folgenden Schritte umfasst:

   i. Bereitstellen eines ersten mechanischen Systems (100), das mindestens zwei mikromechanische Teile (1, 2) umfasst, wobei das erste mikromechanische Teil (1) eine erste Kontaktfläche (10) aufweist, während das zweite mikromechanische Teil (2) eine zweite Kontaktfläche (20) aufweist, die abgerundet oder gewölbt ist, wobei das erste und das zweite mikromechanische Teil (1, 2) dazu gestaltet sind, sich derart in Bezug aufeinander zu verlagern, dass die erste und die zweite Kontaktfläche (10, 20) aufeinander gleiten oder rollen, wobei die Materialien der ersten und der zweiten Kontaktfläche (10, 20) sowie die Kontaktbedingungen derart sind, dass die Art der Verformung rein elastisch ist, wobei die erste Kontaktfläche (10) ferner eine Geometrie aufweist, die derart ist, dass es möglich ist, die Hertz-Theorie zum Berechnen der elastischen Verformungen anzuwenden;
   ii. Bestimmen der folgenden charakteristischen Parameter des ersten mechanischen Systems (100):

      ∘ $E$, des Elastizitätsmoduls des Materials der ersten Kontaktfläche des ersten mikromechanischen Teils;
      ∘ $G$, des Schubmoduls des Materials der ersten Kontaktfläche des ersten mikromechanischen Teils;
      ∘ $v$, der Poissonzahl des Materials der ersten Kontaktfläche des ersten mikromechanischen Teils;
      ∘ $v$, der relativen Bewegungsgeschwindigkeit zwischen dem ersten und dem zweiten mikromechanischen Teil;
      ∘ $F_N$, der Normalkraft zwischen dem ersten und dem zweiten mikromechanischen Teil;
      ∘ $f$, der Frequenz der relativen Bewegung zwischen dem ersten und dem zweiten mikromechanischen Teil;
      o $A$, der tatsächlichen Kontaktoberfläche zwischen der ersten und der zweiten Kontaktfläche;
      ∘ $b$, der Breite der tatsächlichen Kontaktoberfläche A zwischen der ersten und der zweiten Kontaktfläche;
      ∘ $\theta$, des Neigungswinkels der zweiten abgerundeten Kontaktfläche in Bezug auf die erste Kontaktfläche;
      ∘ $\phi_o$, einer Konstanten zwischen 0 und 1, die den Anfangsanteil der durch adsorbierte Verunreinigungen bedeckten ersten Oberfläche kennzeichnet;
      ∘ $r$, des charakteristischen Krümmungsradius der zweiten abgerundeten Kontaktfläche;

   iii. Modellieren des Reibungskoeffizienten in Abhängigkeit von der Zeit durch die folgende Gleichung:

$$\mu(t) = \left( \phi_o e^{-(k_a p + k_r)t} + \frac{k_a p}{k_a p + k_r} \left( 1 - e^{-(k_a p + k_r)t} \right) \right)(\mu_1 - \mu_2) + \mu_2$$

$$+ \frac{a}{b} \left( \frac{1}{r} \left( \frac{3F_N}{4E^*} \right)^2 \right)^{1/3} + \frac{2 \left( a_0 + \frac{2Lft}{v} \frac{da}{dt} \right)^3 F_N \mu_{ad}^2}{EbL^4}$$

mit

$$\mu_{ad} = \left( \phi_o e^{-(k_a p + k_r)t} + \frac{k_a p}{k_a p + k_r} \left( 1 - e^{-(k_a p + k_r)t} \right) \right)(\mu_1 - \mu_2) + \mu_2$$

wo $k_a$ eine Konstante ist, die den Adsorptionsanteil an der Fläche der ersten Kontaktfläche kennzeichnet; $k_r$ eine Konstante ist, die den Entfernungsanteil einer Verunreinigung an der Fläche der ersten Kontaktfläche kennzeichnet;

t die Zeit ist;

p der Teildruck der Verunreinigungen ist;

$\mu_1$ der Reibungskoeffizient der ersten vollständig verunreinigten Kontaktfläche ist;

$\mu_2$ der Reibungskoeffizient der ersten vollständig sauberen Kontaktfläche ist;

$\alpha$ eine Konstante ist, welche die verlorene elastische Energie kennzeichnet und einen Wert von zwischen 0 und 1 aufweist;

E* das verminderte Elastizitätsmodul ist, $E^* = \frac{E}{2(1-v^2)}$ ;

a die Tiefe der Risse an der Fläche der ersten Kontaktfläche ist; und

L ein Abstand ist, der den Zwischenraum zwischen den Rissen an der Oberfläche der ersten Kontaktfläche kennzeichnet.

iv. Bereitstellen eines zweiten (konkreten oder theoretischen) mechanischen Systems, das nahezu identisch mit dem ersten mechanischen System ist, aber für das mindestens einer der folgenden charakteristischen Parameter geändert wird, wobei die anderen charakteristischen Parameter unverändert bleiben: Normalkraft $F_N$, Neigungswinkel $\theta$, tatsächliche Kontaktoberfläche $A$, charakteristischer Radius $r$ der zweiten abgerundeten Kontaktfläche, Breite $b$ der tatsächlichen Kontaktoberfläche $A$, Anfangsanteil $\phi_o$ der durch adsorbierte Verunreinigungen bedeckten ersten Kontaktfläche;

v. Anwenden der Schritte i bis iii des Verfahrens auf das zweite mechanische System, um eine entsprechende Modellierung des Reibungskoeffizienten zu erhalten;

vi. Vergleichen der modellierten Reibungskoeffizienten des ersten und des zweiten mechanischen Systems, um den Reibungskoeffizienten und somit das optimale System zu bestimmen.

2. Verfahren nach Anspruch 1, **dadurch gekennzeichnet, dass** es ferner den folgenden Schritt umfasst:
vii. Bestimmen, ausgehend von dem in Schritt iii modellierten Reibungskoeffizienten, der optimalen Werte für mindestens einen der charakteristischen Parameter des mechanischen Systems, um einen bestimmten Reibungskoeffizienten und vorzugsweise für mindestens einen der folgenden Parameter zu erhalten: Normalkraft $F_N$, Neigungswinkel $\theta$, tatsächliche Kontaktoberfläche $A$, charakteristischer Radius $r$ der zweiten abgerundeten Kontaktfläche, Breite $b$ der tatsächlichen Kontaktoberfläche $A$, Anfangsanteil $\phi_o$ der durch adsorbierte Verunreinigungen bedeckten ersten Kontaktfläche.

3. Verfahren nach Anspruch 2, **dadurch gekennzeichnet, dass** es ferner den folgenden Schritt umfasst:
viii. Herstellen eines mechanischen Systems gemäß den im Schritt vii bestimmten optimalen Werten.

4. Verfahren nach Anspruch 3, **dadurch gekennzeichnet, dass** das mechanische System mittels eines der folgenden Herstellungsverfahren hergestellt wird: selektives Ätzen der Fläche, vorzugsweise reaktives Ionentiefenätzen (DRIE), Laserverfahren, vorzugsweise DLIP, kolloidale Lithographie oder Aufbringen von Schichten.

5. Verfahren nach einem der vorhergehenden Ansprüche, **dadurch gekennzeichnet, dass** die Geometrie der ersten Kontaktfläche des ersten mikromechanischen Teils im Wesentlichen flach oder konvex oder konkav ist.

6. Verfahren nach einem der vorhergehenden Ansprüche, **dadurch gekennzeichnet, dass** die Geometrie der ersten und der zweiten Kontaktfläche derart ist, dass der Kontakt zwischen der ersten und der zweiten Kontaktfläche mit einem der folgenden Typen vergleichbar ist: Zylinder auf Zylinder, Kugel auf Kugel, Kugel auf ebener Fläche, Zylinder auf ebener Fläche, konvexe Fläche auf konkaver Fläche.

7. Verfahren nach einem der vorhergehenden Ansprüche, **dadurch gekennzeichnet, dass** das erste und das zweite mikromechanische Teil aus zerbrechlichen Materialien bestehen.

8. Verfahren nach dem vorhergehenden Anspruch, **dadurch gekennzeichnet, dass** das erste und das zweite mikromechanische Teil aus Silizium oder Siliziumoxid bestehen.

9. Verfahren nach einem der vorhergehenden Ansprüche, **dadurch gekennzeichnet, dass** die charakteristischen Parameter des mechanischen Systems entweder durch experimentelle Versuche oder durch Messung oder durch Simulation erhalten oder aus der Literatur oder einer Kombination der einen oder der anderen dieser Quellen gewonnen werden.

10. Verfahren nach einem der vorhergehenden Ansprüche, **dadurch gekennzeichnet, dass** das mechanische System ein Uhrensystem ist, das dazu bestimmt ist, ein Uhrwerk auszustatten.

**Claims**

1. Method for modelling the coefficient of friction of a mechanical system comprising the following steps:

   i. providing a first mechanical system (100) comprising at least two micromechanical parts (1, 2), the first micromechanical part (1) having a first contact surface (10) while the second micromechanical part (2) has a rounded or domed second contact surface (20), the first and second micromechanical parts (1, 2) being arranged to move with respect to each other so that the first and second contact surfaces (10, 20) slide or roll one on the other, the materials of the first and second contact surfaces (10, 20) as well as the contact conditions being such that the deformation regime is purely elastic, the first contact surface (10) further having a geometry such that it is possible to apply the Hertz theory in order to calculate the elastic deformations;
   ii. determining the following characteristic parameters of the first mechanical system (100):

   ○ $E$, the modulus of elasticity of the material of the first contact surface of the first micromechanical part;
   ○ $G$, the shear modulus of the material of the first contact surface of the first micromechanical part;
   ○ $v$, the Poisson's ratio of the material of the first contact surface of the first micromechanical part;
   ○ $v$, the speed of the relative movement between the first and second micromechanical parts;
   ○ $F_N$, the normal force between the first and second micromechanical parts;
   ○ $f$, the frequency of the relative movement between the first and second micromechanical parts;
   ○ $A$, the area of actual contact between the first and the second contact surfaces;
   ○ $b$, the width of the area of actual contact A between the first and the second contact surfaces;
   ○ $\theta$, the angle of inclination of the rounded second contact surface with respect to the first contact surface;
   ○ $\Phi_0$, a constant between 0 and 1 characterising the initial amount of the first contact surface covered by adsorbed contaminants;
   ○ $r$, the characteristic radius of curvature of the rounded second contact surface;

   iii. modelling the COF as a function of time by means of the following equation:

$$\mu(t) = \left( \phi_0 e^{-(k_a p + k_r)t} + \frac{k_a p}{k_a p + k_r} \left( 1 - e^{-(k_a p + k_r)t} \right) \right) (\mu_1 - \mu_2) + \mu_2$$

$$+ \frac{\alpha}{b} \left( \frac{1}{r} \left( \frac{3F_N}{4E^*} \right)^2 \right)^{1/3} + \frac{2 \left( a_0 + \frac{2Lft}{v} \frac{da}{dt} \right)^3 F_N \mu_{ad}^2}{EbL^4}$$

with

$$\mu_{ad} = \left( \phi_0 e^{-(k_a p + k_r)t} + \frac{k_a p}{k_a p + k_r} \left( 1 - e^{-(k_a p + k_r)t} \right) \right) (\mu_1 - \mu_2) + \mu_2$$

where $k_a$ is a constant characterising the level of adsorption at the surface of the first contact surface;
$k_r$ is a constant characterising the level of removal of a contaminant at the surface of the first contact surface;
t is time;
p is the partial pressure of the contaminants;
$\mu_1$ is the COF of the completely contaminated first contact surface;
$\mu_2$ is the COF of the completely clean first contact surface;
$\alpha$ is a constant characterising the lost elastic energy and is between 0 and 1;

$$E^* = \frac{E}{2(1-v^2)} \; ;$$
$E^*$ is the reduced modulus of elasticity,
a is the depth of the cracks at the surface of the first contact surface; and
L is a distance which characterises the spacing between the cracks at the surface of the first contact surface,

iv. providing a second mechanical system (actual or theoretical) virtually identical to the first mechanical system but for which at least one of the following characteristic parameters is changed, the other characteristic parameters remaining unchanged: normal force $F_N$, angle of inclination $\theta$, area of actual contact $A$, characteristic radius of the rounded second contact surface $r$, width $b$ of the area of actual contact $A$, the initial amount of the surface of the first contact surface covered by adsorbed contaminants $\Phi_0$;
v. applying steps i to iii of the method to the second mechanical system in order to obtain corresponding modelling of the COF,
vi. comparing the modelled COFs of the first and second mechanical systems in order to determine the COF and thus the optimal system.

2. Method as claimed in claim 1, **characterised in that** it further comprises the following step
vii. determining, from the COF modelled in step iii, optimal values for at least one of the characteristic parameters of the mechanical system in order to obtain a determined COF and preferably, for at least one of the following parameters: normal force $F_N$, angle of inclination $\theta$, area of actual contact $A$, characteristic radius of the rounded second contact surface $r$, width $b$ of the area of actual contact $A$, the initial amount of the surface of the first contact surface covered by adsorbed contaminants $\Phi_0$.

3. Method as claimed in claim 2, **characterised in that** it further comprises the following step:
viii. producing a mechanical system according to the optimal values determined in step vii.

4. Method as claimed in claim 3, **characterised in that** the mechanical system is produced with the aid of one of the following production processes: selective etching of the surface, preferably deep reactive-ion etching (DRIE), laser method, preferably DLIP, colloidal lithography or layer deposition.

5. Method as claimed in any one of the preceding claims, **characterised in that** the geometry of the first contact surface of the first micromechanical part is essentially flat or convex or concave.

6. Method as claimed in any one of the preceding claims, **characterised in that** the geometry of the first and second contact surfaces is such that the contact between the first and second contact surfaces is comparable to one of the following types: cylinder on cylinder, ball on ball, ball on flat, cylinder on flat, convex surface on concave surface.

7.  Method as claimed in any one of the preceding claims, **characterised in that** the first and second micromechanical parts are produced from fragile materials.

8.  Method as claimed in the preceding claim, **characterised in that** the first and second micromechanical parts are produced from silicon or silica.

9.  Method as claimed in any one of the preceding claims, **characterised in that** the characteristic parameters of the mechanical system are obtained either by experimental trials or by measuring or by simulation or are extracted from the literature or a combination of one or other of these sources.

10. Method as claimed in any one of the preceding claims, **characterised in that** the mechanical system is a timepiece mechanism intended to equip a timepiece movement.

Fig.1

Fig.2

100

10

Point of contact — 2

— 20

Sliding direction

Sliding direction — 1

Fig.3

Fig.4

$E_{ad}$ $E_{Ez}$ $E_{Ey}$

Fig.5

Fig.6

Top view

Fig.7

Side view

Fig.8

Fig.9

Fig.10

Fig.11a                                    Fig.11b

r₁

121.3 um

Point of
contact

Motion (left right

r₂ (top)    r₁    r₂ (bottom)

⊗
Motion
(in/out)

Side View                          Front View

Fig.12a

Fig.12b

Fig.12c

Fig.13

EP 4 016 049 B1

Fig.14

Fig.15

Oxide layer

Silicon bulk

5 μm

Fig.16

Fig.17

Fig.18

Fig.19

Fig.20

Fig.21

Fig.22

Fig.23

Fig.24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE PANTCHO STOYANOV ; RICHARD R. CHROMIK.** Scaling Effects on Materials Tribology: From Macro to Micro Scale. *MATERIALS,* 01 Mai 2017, vol. 10 (550